(19) Europäisches Patentamt
European Patent Office
Office européen des brevets

(11) EP 3 922 682 A1

(12) **EUROPEAN PATENT APPLICATION**
published in accordance with Art. 153(4) EPC

(43) Date of publication:
**15.12.2021 Bulletin 2021/50**

(21) Application number: **19922290.2**

(22) Date of filing: **25.11.2019**

(51) Int Cl.:
***C09C 3/10*** *(2006.01)* ***B41J 2/01*** *(2006.01)*
***B41M 5/00*** *(2006.01)* ***C08K 9/10*** *(2006.01)*
***C08L 101/00*** *(2006.01)* ***C09B 67/08*** *(2006.01)*
***C09C 1/00*** *(2006.01)* ***C09D 7/41*** *(2018.01)*
***C09D 7/62*** *(2018.01)* ***C09D 7/65*** *(2018.01)*
***C09D 11/037*** *(2014.01)* ***C09D 11/32*** *(2014.01)*
***C09D 201/00*** *(2006.01)* ***C08G 18/32*** *(2006.01)*
***C08G 59/62*** *(2006.01)* ***C08G 63/183*** *(2006.01)*
***C09B 31/14*** *(2006.01)*

(86) International application number:
**PCT/JP2019/045963**

(87) International publication number:
**WO 2020/202634 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068415**

(71) Applicant: **FUJIFILM Corporation**
**Tokyo 106-8620 (JP)**

(72) Inventors:
- **HAYASHI, Shinya**
**Fujinomiya-shi, Shizuoka 418-8666 (JP)**
- **ARIOKA, Daisuke**
**Fujinomiya-shi, Shizuoka 418-8666 (JP)**

(74) Representative: **Hoffmann Eitle**
**Patent- und Rechtsanwälte PartmbB**
**Arabellastraße 30**
**81925 München (DE)**

# (54) MICROCAPSULES, MICROCAPSULE COMPOSITION, INK COMPOSITION, COATING MATERIAL, AND RESIN COMPOSITION

(57) There are provided a microcapsule that includes a shell part containing a polymer and a core part encapsulated in the shell part, where the core part contains a coloring material and the polymer has an ultraviolet absorbent skeleton in the main chain thereof, and an application of the microcapsule.

EP 3 922 682 A1

## Description

BACKGROUND OF THE INVENTION

1. Field of the Invention

The present disclosure relates to a microcapsule, a microcapsule composition, and an ink composition, a paint, and a resin composition.

2. Description of the Related Art

In the related art, a recorded matter that is recorded using a coloring material has been required to have long-term preservation stability, and in particular, there has been a high demand that a recorded matter does not fade (that is, light fastness) under exposure to light.

For example, JP3446213B discloses an ink composition containing fine particles that contain a dye or pigment in a high molecular weight polymer, in which a polymer that has a moiety having an ultraviolet absorbing activity and a moiety having a light stabilizing activity in the molecular chain thereof is used for improving light fastness. It is specifically described that this polymer is obtained by polymerizing a monomer having a moiety having an ultraviolet absorbing activity and/or a light stabilizing activity.

In addition, JP2000-34430A discloses an ink composition in which microcapsules having a polyurea/polyurethane wall are dispersed in an aqueous medium, where the microcapsules are allowed to contain both a water-insoluble dye and an anti-fading agent.

Further, JP2005-305872A discloses microcapsules that can be suitably used for a heat-sensitive recording material and a multicolor heat-sensitive recording material, where the microcapsules come into contact with a coupler or a color developer to exhibit high color developability and have excellent biological storage stability. In addition, JP2005-305872A discloses that polyurethane and/or urea of a capsule wall contains a triazine ring in the chemical structure thereof.

SUMMARY OF THE INVENTION

However, the polymer specifically disclosed in JP3446213B has a moiety having an ultraviolet absorbing activity and/or a light stabilizing activity in the side chain thereof. For this reason, in a case where the number of moieties having an ultraviolet absorbing activity and/or a light stabilizing activity is increased for further improving the light fastness, there is a problem that the strength of the shell is reduced. In this case, in a case where the thickness of the shell is reduced for improving adhesion, the number of moieties having an ultraviolet absorbing activity and/or a light stabilizing activity becomes relatively small, and thus the light fastness is reduced. As a result, it is difficult to achieve all of the light fastness, the adhesion, and the strength.

In the microcapsules having a polyurea/polyurethane wall disclosed in JP2000-34430A, the anti-fading agent is present in the core part but not present in the shell part, and thus the excellent light fastness cannot be expected.

Further, JP2005-305872A discloses microcapsules in which a capsule wall made of polyurethane and/or urea contains a triazine ring in the chemical structure thereof. However, JP2005-305872Arelates to a technique in which microcapsules come into contact with a coupler or a color developer to exhibit high color developability and have excellent biological storage stability so that the coloring of the background, which is called "fogging", does not appear, and the containing of a coloring material or the light fastness to a coloring material was not examined.

This disclosure has been made in consideration of such circumstances.

According to an embodiment of the present invention, a microcapsule having excellent light fastness, high adhesion, and high strength is provided.

According to another embodiment of the present invention, a microcapsule composition containing a microcapsule having excellent light fastness, high adhesion, and high strength is provided.

According to another embodiment of the present invention, an ink composition, a paint, and a resin composition, which contain microcapsules having excellent light fastness, high adhesion, and high strength, are provided.

The present disclosure includes the following aspects.

<1> A microcapsule comprising:

a shell part containing a polymer; and
a core part encapsulated in the shell part,
in which the core part contains a coloring material, and the polymer has an ultraviolet absorbent skeleton in a

main chain.

<2> The microcapsule according to <1>, wherein S/C, which is a ratio of a mass S of the shell part to a mass C of the core part, is 1/7 to 3/1.
<3> The microcapsule according to <1> or <2>, wherein a mass ratio of the ultraviolet absorbent skeleton to the coloring material is 10% by mass to 70% by mass.
<4> The microcapsule according to any one of <1> to <3>, wherein the polymer is polyurethane, polyurea, polyurethane urea, polyaminoplast, polyester, polyether, or polyamide.
<5> The microcapsule according to any one of <1> to <4>, wherein the polymer is polyurea, polyurethane, or polyurethane urea.
<6> The microcapsule according to any one of <1> to <5>, wherein the ultraviolet absorbent skeleton is a skeleton derived from an ultraviolet absorbent compound.
<7> The microcapsule according to <6>, wherein the ultraviolet absorbent compound has at least two substituents that do not form an intramolecular hydrogen bond, the two substituents being selected from the group consisting of a hydroxyl group, an amino group, a thiol group, an epoxy group, and a carboxy group.
<8> The microcapsule according to any one of <1> to <7>, wherein the ultraviolet absorbent skeleton is a benzophenone skeleton, a benzotriazole skeleton, or a triazine skeleton.
<9> The microcapsule according to any one of <1> to <8>, wherein the ultraviolet absorbent skeleton is a skeleton derived from a benzophenone compound represented by Formula (1).

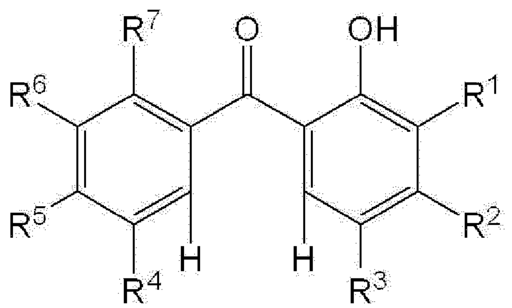

(1)

In Formula (1), $R^1$, $R^2$, $R^3$, $R^4$, $R^5$, $R^6$, and $R^7$ each independently represent a hydrogen atom, a halogen atom, an alkyl group, an alkoxy group, a hydroxyl group, an amino group, a thiol group, a carboxy group, or a sulfo group, and at least two of $R^1$ to $R^6$ are each a hydroxyl group or an amino group.
<10> A microcapsule composition comprising the microcapsule according to any one of <1> to <9> and a solvent.
<11> An ink composition comprising the microcapsule according to any one of <1> to <9> and a solvent.
<12> A paint comprising the microcapsule according to any one of <1> to <9> and a solvent.
<13> A resin composition comprising the microcapsule according to any one of <1> to <9> and a resin.

According to an embodiment of the present invention, a microcapsule having excellent light fastness, high adhesion, and high strength is provided.
According to another embodiment of the present invention, a microcapsule composition containing a microcapsule having excellent light fastness, high adhesion, and high strength is provided.
According to another embodiment of the present invention, an ink composition, a paint, and a resin composition, which contain microcapsules having excellent light fastness, high adhesion, and high strength, are provided.

## DESCRIPTION OF THE PREFERRED EMBODIMENTS

Hereinafter, a microcapsule, a microcapsule composition, and an ink composition, a paint, and a resin composition of the present disclosure will be described in detail.
The description of the constitutional requirements according to the embodiment of the present invention is based on the representative embodiments of the present disclosure, but the present disclosure is not limited to such embodiments.
In the present specification, the numerical range indicated by using "to" means a range including numerical values described before and after "to" as a minimum value and a maximum value, respectively.
In the range of numerical values disclosed stepwise in the present specification, an upper limit value and a lower limit value disclosed in a certain range of numerical values may be replaced with an upper limit value and a lower limit value disclosed in another range of numerical values disclosed in stepwise. In addition, in the range of numerical

values disclosed in the specification, an upper limit value and a lower limit value disclosed in a certain range of numerical values may be replaced with values shown in examples.

In the present specification, in a case where there are a plurality of substances corresponding to each component in the composition, the amount of each component in the composition means the total amount of the plurality of substances present in the composition unless otherwise particularly specified.

In addition, in the present specification, a combination of two or more preferred aspects is a more preferred aspect.

Further, in the present specification, the term "step" includes not only an independent step but also a step that cannot be clearly distinguished from other steps, as long as the intended purpose of the step is achieved.

In the present specification, the "shell part" refers to an outer shell that forms a microcapsule particle and refers to the so-called capsule wall. In addition, the "core part" is also referred to as a "central part" and refers to a portion encapsulated by the shell part.

In the present specification, the material for forming the shell part is referred to as a "shell material" or a "wall material", and the component contained in the core part is referred to as a "core material" or a "targeted encapsulated substance".

Further, in the present disclosure, the "encapsulation" refers to a state in which a target object (that is, a targeted encapsulated substance) is covered and confined by a shell part of a microcapsule.

[Microcapsule]

A microcapsule of the present disclosure includes a shell part containing a polymer and a core part encapsulated in the shell part, where the core part contains a coloring material and the polymer in the shell part has an ultraviolet absorbent skeleton in the main chain thereof.

The polymer of the shell part is a shell material (a wall material) for forming the shell part.

In the related art, in order to impart light fastness to a microcapsule, there is known a method in which a shell part is formed of a polymer having an ultraviolet absorbent group in the side chain thereof or a method in which an ultraviolet absorbent compound is covered with a shell part, thereby being encapsulated.

In the former case, in order to improve light fastness, it is necessary to increase the mass ratio of a portion having an ultraviolet absorbent group in the side chain of the polymer. However, in a case where the content ratio of the portion having an ultraviolet absorbent group in the side chain is increased, the strength of the shell part may be reduced, and thus the shape as a microcapsule may not be maintained. That is, from the viewpoint of the strength of the microcapsule, there is a limit to the improvement of light fastness. In response to this circumstance, in a case where an attempt is made to increase the strength of the microcapsule by thickening the shell part, the permeability of the shell part is impaired, and thus the adhesion tends to decrease. Furthermore, in a case where the shell part is thickened, the amount of the coloring material per unit volume decreases, and thus the adhesion tends to decrease after all. Accordingly, it is difficult to achieve high adhesion and high strength while ensuring excellent light fastness.

Further, in the latter case, a satisfactory light fastness may not always be obtained.

Based on the above circumstances, in the microcapsule of the present disclosure, the polymer which is a shell material that forms a shell part has an ultraviolet absorbent skeleton in the main chain thereof. In this case, even in a case where the content ratio of the ultraviolet absorbent skeleton in the polymer is increased, the strength of the shell part is not reduced and is maintained. For this reason, the abundance of the ultraviolet absorbing skeleton can be increased without increasing the thickness of the shell part. For this reason, the microcapsule of the present disclosure is excellent in light fastness and has high adhesion and high strength.

The adhesion refers to the coloring performance that is exhibited depending on the properties, the amount, and the like of the coloring material encapsulated in the microcapsule and can be evaluated using the coloring density as an indicator.

(Shell part)

The shell part in the present disclosure contains a polymer having an ultraviolet absorbent skeleton in the main chain thereof as a shell material.

In the microcapsule of the present disclosure, due to having an ultraviolet absorbent skeleton in the main chain of the polymer, the shell part is excellent in light fastness as compared with the case where an ultraviolet absorbing agent is contained as a core material. Even in a case where the abundance ratio of the ultraviolet absorbent skeleton is increased from the viewpoint of improving light fastness, it is advantageous in that the reduction of the strength of the shell part is suppressed, and thus the strength of the shell part is maintained satisfactorily as compared with the case where the content of an ultraviolet absorbing agent, which is a core material, is increased. Further, since the strength of the shell part can be maintained satisfactorily, the thickness of the shell part can be reduced, and the coloring density

(that is, the adhesion) exhibited by the encapsulated coloring material is also improved.

The main chain of a polymer refers to a binding chain that has the relatively longest stem among the chain-like portions in the polymer.

In the present disclosure, the "ultraviolet absorbent skeleton" means a moiety that exhibits ultraviolet absorbency in the molecule. The "ultraviolet absorbency" means the property of absorbing ultraviolet rays and specifically means the property of absorbing ultraviolet rays in sunlight or fluorescence (preferably having a wavelength of 190 nm to 400 nm and more preferably having a wavelength of 300 nm to 380 nm) and converting the ultraviolet rays into energy such as heat.

The ultraviolet absorbent skeleton is preferably a skeleton derived from an ultraviolet absorbent compound.

The skeleton derived from an ultraviolet absorbent compound refers to a structural portion that is introduced into a polymer by an ultraviolet absorbent compound, where the ultraviolet absorbent compound reacts with a raw material compound, which is used for forming the polymer and is a shell material. In other words, the ultraviolet absorbent compound is also one of the raw material compounds for forming a polymer.

The method of introducing an ultraviolet absorbent skeleton into a polymer is not particularly limited; however, examples thereof include a method of reacting an ultraviolet absorbent compound having at least two reactive groups with a compound (in other words, a raw material compound for forming a polymer other than the ultraviolet absorbent compound) having at least two functional groups capable of reacting with the reactive groups of the ultraviolet absorbent compound.

In this case, the ultraviolet absorbent skeleton that is introduced into the main chain of the polymer is a skeleton derived from the ultraviolet absorbent compound as a raw material of the skeleton.

In the present disclosure, the ultraviolet absorbent skeleton shall not contain a bond portion formed by reacting an ultraviolet absorbent compound with a raw material compound (hereinafter, also referred to simply as a "raw material compound other than the ultraviolet absorbent compound") for forming a polymer other than the ultraviolet absorbent compound. For example, in a case where an ultraviolet absorbent compound having at least two reactive groups (for example, hydroxyl groups) reacts with a raw material compound (for example, an isocyanate compound in a case where the polymer is polyurethane) other than the ultraviolet absorbent compound to form a urethane bond, the portion of the urethane bond (C(=O)NH-) shall not be contained in the ultraviolet absorbent skeleton.

The fact that the ultraviolet absorbent skeleton does not contain the above-described bond portion will be explained using, as an example, a case where 2,4,4'-trihydroxybenzophenone which may have a substituent is used among the benzophenone compounds represented by Formula (1) described later.

2,4,4'-trihydroxybenzophenone which may have a substituent reacts with a raw material compound (for example, an isocyanate compound in a case where the polymer is polyurethane) other than the ultraviolet absorbent compound, whereby a structural portion shown below is introduced into the main chain.

That is, in a case where the polymer is polyurethane, the ultraviolet absorbent skeleton refers to a structural portion of the structure of 2,4,4'-trihydroxybenzophenone, where the bonding portion is formed by reacting 2,4,4'-trihydroxybenzophenone (an ultraviolet absorbent compound) with an isocyanate compound. In other words, the ultraviolet absorbent skeleton refers to a structural portion that does not contain the portion of the urethane bond (C(=O)NH-).

$R^1$, $R^3$, $R^4$, $R^6$, and $R^7$ in the following structural portion are synonymous with the substituents in Formula (1) described later, and * represents a bonding site in the main chain of the polymer.

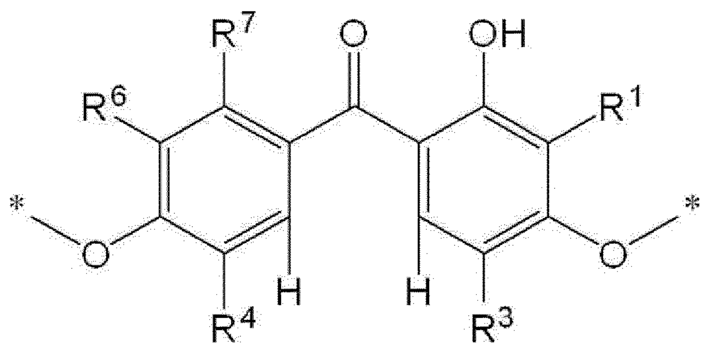

The ultraviolet absorbent compound in the present disclosure is preferably a compound having an ultraviolet absorbent skeleton in the molecule and at least two reactive groups that do not form an intramolecular hydrogen bond from the viewpoint of introducing an ultraviolet absorbent skeleton into the main chain of the polymer which is a shell material.

The reactive group varies depending on the kind of polymer and is preferably a substituent selected from the group consisting of a hydroxyl group, an amino group, a thiol group, an epoxy group, and a carboxy group.

In a case where an ultraviolet absorbent compound has the above substituent, it is possible to react the ultraviolet absorbent compound with a compound (in other words, a raw material compound other than the ultraviolet absorbent compound) having at least two functional groups capable of reacting with the above substituent. As a result, a polymer having an ultraviolet absorbent skeleton in the main chain thereof can be obtained.

The ultraviolet absorbent skeleton is not particularly limited as long as the structure has ultraviolet absorbency; however, it is preferably a benzophenone skeleton, a benzotriazole skeleton, or a triazine skeleton from the viewpoint of high ultraviolet absorbing activity and high light fastness. Specifically, the ultraviolet absorbent skeleton is preferably a benzophenone skeleton derived from a benzophenone compound, a benzotriazole skeleton derived from a benzotriazole compound, or a triazine skeleton derived from a triazine compound.

Preferred examples of the ultraviolet absorbent compound having the above substituent include a benzotriazole compound having the above substituent, a triazine compound having the above substituent, and a benzophenone compound having the above substituent.

Examples of the benzotriazole compound having the above substituent include 2-(2'-hydroxy-3'-aminophenyl)-5-hydroxybenzotriazole and 2-[2'-hydroxy-4'-(2,3)-dihydroxypropoxy)phenyl]-5-chlorobenzotriazole.

Examples of the triazine compound having the above substituent include 2-[4,6-bis(2,4-dimethylphenyl)-1,3,5-triazin-2-yl]-5-(2,3-dihydroxy)propoxy)phenol, 2-(2,4-dihydroxyphenyl)-4,6-bis(2,4-dimethylphenyl)-1,3,5-triazine, 2,4,6-tris(2,4-dihydroxy-3-methylphenyl)-1,3,5-triazine, and 2-(2,4-dihydroxyphenyl)-4,6-diphenyl-1,3,5-triazine.

Since the benzophenone compound has a high solubility in a solvent, it is possible to introduce a large amount of a benzophenone skeleton into the polymer. That is, in a case where a benzophenone compound is used, it is possible to increase the mass ratio of the benzophenone skeleton in the polymer, whereby the light fastness can be further improved.

As a result, the ultraviolet absorbent skeleton in the present disclosure is more preferably a benzophenone skeleton.

The benzotriazole compound having the above substituent is preferably a benzophenone compound represented by Formula (1). The benzophenone compound represented by Formula (1) has at least two or more hydroxyl groups or amino groups in total as the above substituents.

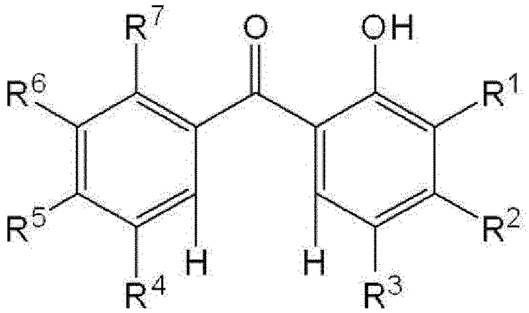

(1)

In Formula (1), $R^1$ to $R^7$ each independently represent a hydrogen atom, a halogen atom, an alkyl group, an alkoxy group, a hydroxyl group, an amino group, a thiol group, a carboxy group, or a sulfo group, and at least two of $R^1$ to $R^6$ are a hydroxyl group or an amino group.

Examples of the halogen atom include a fluorine atom, a chlorine atom, and a bromine atom.

Examples of the alkyl group include a methyl group, an ethyl group, an n-propyl group, an n-butyl group, a t-butyl group, and a hexyl group, and an alkyl group having 1 to 8 carbon atoms (preferably, 1 to 4 carbon atoms) is preferable.

Examples of the alkoxy group include a methoxy group, an ethoxy group, an n-propoxy group, an n-butoxy group, a t-butoxy group, and a hexyloxy group, and an alkoxy group having 1 to 8 carbon atoms (preferably, 1 to 4 carbon atoms) is preferable.

The carboxy group may be present in the form of a salt, and examples of the salt include an alkali metal salt of a carboxylic acid (for example, a sodium salt or a potassium salt).

The sulfo group (the sulfonic acid group) may be present in the form of a salt, and examples of the salt include an alkali metal salt of a sulfonic acid (for example, a sodium salt or a potassium salt).

A case where two or more among $R^1$ to $R^6$ are a hydroxyl group is preferable.

Examples of the benzophenone compound represented by Formula (1) include 2,2',4,4'-tetrahydroxybenzophenone, 2,3,4-trihydroxybenzophenone, 2,4,4'-trihydroxybenzophenone, and 2,2',4,4'-tetrahydroxybenzophenone-5,5'-sodium sulfonate.

From the viewpoint of balance between the light fastness, the adhesion, and strength, the ultraviolet absorbent compound in the present disclosure is particularly preferably a benzophenone compound represented by Formula (1)

and is more preferably a benzophenone compound that is represented by Formula (1) and has at least two hydroxyl groups.

The mass ratio of the ultraviolet absorbent skeleton contained in the polymer of the shell part with respect to the coloring material is preferably 10% by mass to 70% by mass, more preferably 12% by mass to 70% by mass, still more preferably 15% by mass to 65% by mass, particularly preferably 20% by mass to 60% by mass, and most preferably 25% by mass to 55% by mass.

In a case where the mass ratio of the ultraviolet absorbent skeleton with respect to the coloring material is 10% by mass or more, the light fastness is more excellent. Further, in a case where the mass ratio of the ultraviolet absorbent skeleton with respect to the coloring material is 70% by mass or less, the relative amount of the monomer component that forms the shell part does not become too small, and thus the strength of the shell part can be maintained better.

The mass ratio of the ultraviolet absorbent skeleton contained in the polymer with respect to the coloring material is calculated by the following method. That is, the ultraviolet absorbent skeleton and the coloring material, which are contained in the microcapsule, are identified, and respective amounts thereof are obtained to calculate the mass ratio according to the following expression.

$$\text{Ratio of ultraviolet absorbent skeleton (\% by mass)} = \text{mass of ultraviolet absorbent skeleton} / \text{mass of coloring material} \times 100$$

In the production of a polymer which is a shell material that forms the shell part, the compound (in other words, the raw material compound other than the ultraviolet absorbent compound) that reacts with an ultraviolet absorbent compound is preferably a compound that has at least two functional groups capable of reacting with at least two reactive groups that the ultraviolet absorbent compound has. Examples of the functional group include an isocyanate group, a carboxy group, an epoxy group, and a C(=O)Cl group.

The compound to be reacted with the ultraviolet absorbent compound may be one kind alone, or two or more kinds thereof may be used in combination.

The shell part in the present disclosure preferably contains polyurethane, polyurea, polyurethane urea, polyaminoplast, polyester, polyether, or polyamide as the polymer which is a shell material that forms the shell part.

In a case where the shell material that forms the shell part is this polymer, the strength of the shell part is high.

Among the above, the polymer is more preferably polyurea, polyurethane, or polyurethane urea.

With the urethane bond and the urea bond, a hydrogen bond is formed between the molecules, and thus the strength of the shell part becomes higher. Further, in a case where the polymer is polyurea, polyurethane, or polyurethane urea, the elastic modulus is high, and it is possible to impart a property that the shell part is hardly broken in a case where an external force is applied to the microcapsule.

Polyaminoplast is a polymer that is obtained by reacting an amino group-containing compound such as urea or melamine with an aldehyde compound such as formaldehyde. Examples of the polyaminoplast include a melamine-formaldehyde resin and a urea-formaldehyde resin.

[Polyurethane, polyurea, polyurethane urea]

In a case where the polymer which is a shell material is polyurethane, polyurea, or polyurethane urea, the above-described compound having at least two functional groups is suitably a polyfunctional isocyanate compound (that is, a polyisocyanate) having at least two isocyanate groups. The polyisocyanate includes an aromatic polyisocyanate and an aliphatic polyisocyanate. The polyisocyanate may be any of a difunctional polyisocyanate or a trifunctional or higher functional polyisocyanate.

In a case where the isocyanate group reacts with a hydroxyl group, a urethane bond is formed.

Accordingly, for example, in a case where a compound having at least two isocyanate groups as a functional group reacts with an ultraviolet absorbent compound having a hydroxyl group as a reactive group, a polyurethane having an ultraviolet absorbent skeleton is obtained.

In addition, for example, in a case where a compound having at least two isocyanate groups as a functional group reacts with an ultraviolet absorbent compound having an amino group as a reactive group, a polyurea having an ultraviolet absorbent skeleton is obtained.

Further, in a case where a compound having at least two isocyanate groups as a functional group reacts with an ultraviolet absorbent compound having a hydroxyl group and an amino group as a reactive group, a polyurethane urea having an ultraviolet absorbent skeleton can be obtained.

In a case where the polymer which is a shell material is polyurethane, polyurea, or polyurethane urea, the polymer preferably has at least one structural portion of a structural portion derived from an aromatic polyisocyanate or

a structural portion derived from an aliphatic polyisocyanate.

Here, the "structural portion" refers to a structural unit formed by changing the terminal group by subjecting it to a urethane reaction or a urea reaction.

- Difunctional isocyanate compound -

In a case where the polymer which is a shell material is polyurethane, polyurea, or polyurethane urea, the polymer can have a structural portion derived from a difunctional isocyanate compound. That is, polyurethane, polyurea, or polyurethane urea, which is a shell material, can have at least one structural portion selected from a structural portion derived from a difunctional aliphatic isocyanate compound or a structural portion derived from a difunctional aromatic isocyanate compound.

The structural portion derived from a difunctional aliphatic isocyanate compound refers to a structural portion that is formed by urethanizing or ureaizing a difunctional aliphatic isocyanate compound.

The structural portion derived from a difunctional aromatic isocyanate compound refers to a structural portion that is formed by urethanizing or ureaizing a difunctional aromatic isocyanate compound.

Examples of the difunctional aliphatic isocyanate compound include trimethylene diisocyanate, hexamethylene diisocyanate, propylene-1,2-diisocyanate, butylene-1,2-diisocyanate, cyclohexylene-1,2-diisocyanate, cyclohexylene-1,3-diisocyanate, cyclohexylene-1,4-diisocyanate, dicyclohexylmethane-4,4'-diisocyanate, 1,4-bis(isocyanatemethyl)cyclohexane and 1,3-bis(isocyanatemethyl)cyclohexane, isophorone diisocyanate, lysine diisocyanate, and a hydrogenated xylylene diisocyanate.

Examples of the difunctional aromatic isocyanate compound include m-phenylene diisocyanate, p-phenylene diisocyanate, 2,6-tolylene diisocyanate, 2,4-tolylene diisocyanate, naphthalene-1,4-diisocyanate, methylene diphenyl-4,4'-diisocyanate, 3,3'-dimethoxy-biphenyldiisocyanate, 3,3'-dimethyldiphenylmethane-4,4'-diisocyanate, xylylene-1,4-diisocyanate, xylylene-1,3-diisocyanate, 4-chloroxylylene-1,3-diisocyanate, 2-methylxylylene-1,3-diisocyanate, 4,4'-diphenylpropane diisocyanate, and 4,4'-diphenylhexafluoropropane diisocyanate.

The isocyanate compound is described in "Polyurethane Resin Handbook" (edited by Keiji Iwata, published by NIKKAN KOGYO SHIMBUN, Ltd. (1987)).

- Trifunctional or higher functional isocyanate compound -

In addition, in a case where the polymer which is a shell material is polyurethane, polyurea, or polyurethane urea, the polymer can have a structural portion derived from a trifunctional or higher functional isocyanate compound. In a case where a structural portion derived from a trifunctional or higher functional isocyanate compound, the strength and flexibility of the shell part can be increased.

The structural portion derived from a trifunctional or higher functional isocyanate compound refers to a structural portion that is formed by urethanizing or ureaizing a trifunctional or higher functional isocyanate compound.

Examples of the trifunctional or higher functional aliphatic isocyanate compound include a trifunctional or higher functional isocyanate compound (that is, an adduct type) as an adduct body (that is an adduct) of a difunctional aliphatic isocyanate compound (that is, a compound having two isocyanate groups in the molecule) and a compound (for example, a trifunctional or higher functional polyol, polyamine, or polythiol) having three or more active hydrogen groups in the molecule; and a trimer of a difunctional aliphatic isocyanate compound (for example, a biuret type or an isocyanurate type).

As the adduct-type trifunctional or higher functional isocyanate compound, a commercially available product on the market may be used. Examples of the commercially available product thereof include TAKENATE (registered trade mark) D-120N (isocyanate value = 3.5 mmol/g), D-140N, D-160N (all manufactured by Mitsui Chemicals, Inc.), Sumidur (registered trade mark), HT (manufactured by Sumika Bayer Urethane Co., Ltd.), CORONATE (registered trade mark) HL, HX (manufactured by Tosoh Corporation), DURANATE P301-75E (manufactured by Asahi Kasei Corporation), and BURNOCK (registered trade mark) DN-950 (manufactured by DIC Corporation).

Among them, the adduct-type trifunctional or higher functional isocyanate compound is more preferably the TAKENATE (registered trade mark) series (for example, TAKENATE D-110N, D-120N, D-140N, or D-160N) manufactured by Mitsui Chemicals, Inc.

As the isocyanurate-type trifunctional or higher functional isocyanate compound, a commercially available product on the market may be used. Examples of the commercially available product thereof include TAKENATE (registered trade mark) D-127N, D-170N, D-170HN, D-172N, D-177N (manufactured by Mitsui Chemicals, Inc.), Sumidur N3300, and Desmodur (registered trade mark) N3600, N3900, Z4470BA (all manufactured by Sumika Bayer Urethane Co., Ltd.), CORONATE (registered trade mark) HK (manufactured by Tosoh Corporation), DURANATE (registered trade mark) TPA-100, TKA-100 (manufactured by Asahi Kasei Corporation), and BURNOCK (registered trade mark) DN-980 (manufactured by DIC Corporation).

As the biuret-type trifunctional or higher functional isocyanate compound, a commercially available product on

the market may be used. Examples thereof include TAKENATE (registered trade mark) D-165N, NP1200 (manufactured by Mitsui Chemicals, Inc.), Desmodur (registered trade mark) N3200A (manufactured by Sumika Bayer Urethane Co., Ltd.), and DURANATE (registered trade mark) 24A-100, 22A-75P (manufactured by Asahi Kasei Corporation).

Specific examples of the trifunctional or higher functional aromatic isocyanate compound include an adduct (that is, an adduct type), a biuret body, and an isocyanurate body of hexamethylene diisocyanate and 2,6-tolylene diisocyanate, 2,4-tolylene diisocyanate, or trimethylolpropane.

As the trifunctional or higher functional aromatic isocyanate compound, a commercially available product on the market may be used. Examples of the commercially available product thereof include BURNOCK (registered trade mark) D-750, D-800 (manufactured by DIC Corporation), TAKENATE (registered trade mark) D-102, D-103, D-103H, D-103M2, D-110N, OLESTER (registered trade mark) P49-75S (all manufactured by Mitsui Chemicals, Inc.), Desmodur (registered trade mark) L75, IL-135-BA, HL-BA, Sumidur (registered trade mark) E-21-1 (manufactured by Sumika Bayer Urethane Co., Ltd.), and CORONATE (registered trade mark) L, L-55, L-55E (manufactured by Tosoh Corporation).

The proportion of the structural portion derived from the trifunctional or higher functional isocyanate compound with respect to the solid content mass in the shell material is preferably 20% by mass to 95% by mass and more preferably 30% by mass to 90% by mass. In a case where the proportion of the structural portion derived from the trifunctional or higher functional isocyanate compound is 20% by mass or more, it is possible to form the shell satisfactorily. Further, in a case where the proportion of the structural portion derived from the trifunctional or higher functional isocyanate compound is 95% by mass or less, it is advantageous in that an ultraviolet absorbent skeleton necessary for improving light fastness can be introduced.

The polyurethane, the polyurea, or the polyurethane urea, which is a shell material in the present disclosure, preferably has a structural portion derived from a trifunctional or higher functional isocyanate compound.

The trifunctional or higher functional isocyanate compound in the present disclosure preferably contains at least one selected from the group consisting of a trifunctional or higher functional aliphatic isocyanate compound and a trifunctional or higher functional aromatic isocyanate compound, and more preferably contains a trifunctional or higher functional aliphatic isocyanate compound alone.

- Polyol, polyamine -

In a case where the polymer which is a shell material is polyurethane, polyurea, or polyurethane urea, a polyol or a polyamine can be used as a compound to be urethanized or ureaized with an isocyanate compound.

That is, an oil phase that is used for producing polyurethane, polyurea, or polyurethane urea can be allowed to contain a polyol and a polyamine.

The polyol is a molecule having any structure, which has two or more hydroxyl groups per molecule. The polyol preferably has 3 or more hydroxyl groups per molecule and may have, for example, 4 or 8 hydroxyl groups.

The polyol may be any of a synthetic polyol or a natural polyol, and may be a molecule having a linear, branched, or cyclic structure.

Examples of the polyol include ethylene glycol, polyethylene glycol (the polymerization degree may be 2, 3, 4, 5, or 6 or more), propylene glycol, polypropylene glycol (the polymerization degree may be 2, 3, 4, 5, 6 or more.), neopentyl glycol, 3-methyl-1,3-butanediol, 1,3-butylene glycol, isoprene glycol, 1,2-pentanediol, 1,2-hexanediol, glycerin, polyglycerin (the polymerization degree may be 2, 3, 4, 5, or 6 or higher), pentaerythritol, and N,N,N',N'-tetrakis(2-hydroxypropyl)ethylenediamine.

The polyamine includes a diamine, a triamine, and a tetraamine. Examples of the polyamine include triethanolamine, hexamethylenediamine, and diethylenetriamine.

The total amount of the polyol and the polyamine is preferably 0.01% by mass to 25% by mass and more preferably 0.1% by mass to 20% by mass with respect to the total amount of the isocyanate compound.

[Polyether, polyester]

In a case where the polymer which is a shell material is a polyether or a polyester, the above-described compound having at least two functional groups is suitably a compound having at least two epoxy groups.

In a case where the epoxy group reacts, an ether bond is formed.

In a case where the polymer which is a shell material is a polyether, examples of the compound having at least two epoxy groups include diglycidyl ethers such as ethylene glycol diglycidyl ether, resorcinol diglycidyl ether, neopentyl glycol diglycidyl ether, and 1,6-hexanediol diglycidyl ether, a halogenated bisphenol A diglycidyl ether, trimethylolpropane polyglycidyl ether, polyglycerin polyglycidyl ether, glycerin polyglycidyl ether, pentaerythritol polyglycidyl ether, diglycerin polyglycidyl ether, sorbitol polyglycidyl ether, polybutadiene diglycidyl ether, diethylene glycol diglycidyl ether, polyethylene glycol diglycidyl ether, dipropylene glycol diglycidyl ether, and 1,4-butanediol diglycidyl ether; glycidyl amines such as tetraglycidyl diaminodiphenylmethane and triglycidyl-p-aminophenol; and glycidyl esters such as phthalic acid diglycidyl ester, terephthalic acid diglycidyl ester, hexahydrophthalic acid diglycidyl ester, and dimer acid diglycidyl ether.

Further, the compound having at least two epoxy groups may be an epoxy resin. The structure of the epoxy resin is not particularly limited and may be any of a glycidyl ether type, a glycidyl amine type, or a glycidyl ester type.

For example, in a case where a glycidyl ether having at least two epoxy groups as the functional group or a glycidyl ether-type epoxy resin reacts with an ultraviolet absorbent compound having at least two substituents selected from a hydroxyl group and an amino group as the reactive group, a polyether having an ultraviolet absorbent skeleton is obtained.

Further, in a case where a glycidyl ester having at least two epoxy groups or a glycidyl ester-type epoxy resin reacts with an ultraviolet absorbent compound having at least two substituents selected from a hydroxyl group and an amino group, a polyester having an ultraviolet absorbent skeleton is obtained.

A curing agent may be used for these reactions.

In addition, in a case where the polymer which is a shell material is a polyester, the above-described compound having at least two functional groups is suitably a compound having at least two C(=O)Cl groups.

Examples of the compound having at least two C(=O)Cl groups include terephthaloyl chloride, 1,4-cyclohexanedicarboxylic acid dichloride, 2,6-naphthalenedicarboxylic acid dichloride, 4,4'-biphenyldicarboxylic acid dichloride, 3,3'-biphenyldicarboxylic acid dichloride, 4,4'-oxybis(benzoyl chloride), isophthaloyl dichloride, phthaloyl dichloride, and 1,3,5-benzenetricarbonyltrichloride.

In a case where a C(=O)Cl group or a C(=O)H group reacts with a hydroxyl group, an ester bond is formed.

For example, in a case where a compound having at least two C(=O)Cl groups reacts with an ultraviolet absorbent compound having a hydroxyl group as the reactive group, a polyester having an ultraviolet absorbent skeleton is obtained. For example, the following "example 3 of the main chain containing an ultraviolet absorbent skeleton" shows a main chain in a case of reacting terephthaloyl chloride with a benzophenone compound.

In addition, in a case where the C(=O)Cl group reacts with an amino group, an amide bond is formed.

For example, in a case where a compound having at least two C(=O)Cl groups reacts with an ultraviolet absorbent compound having an amino group, a polyamide having an ultraviolet absorbent skeleton is obtained. For example, the following "example 4 of the main chain containing an ultraviolet absorbent skeleton" and "example 5 of the main chain containing an ultraviolet absorbent skeleton" show a main chain in the case of the polyaminoplast.

Examples of the main chain of the polymer, which has an ultraviolet absorbent skeleton, are shown below. However, the present disclosure is not limited to these examples. The following structures do not show only the ultraviolet absorbent skeleton.

Example 1 of the main chain containing an ultraviolet absorbent skeleton (a case of polyurethane)

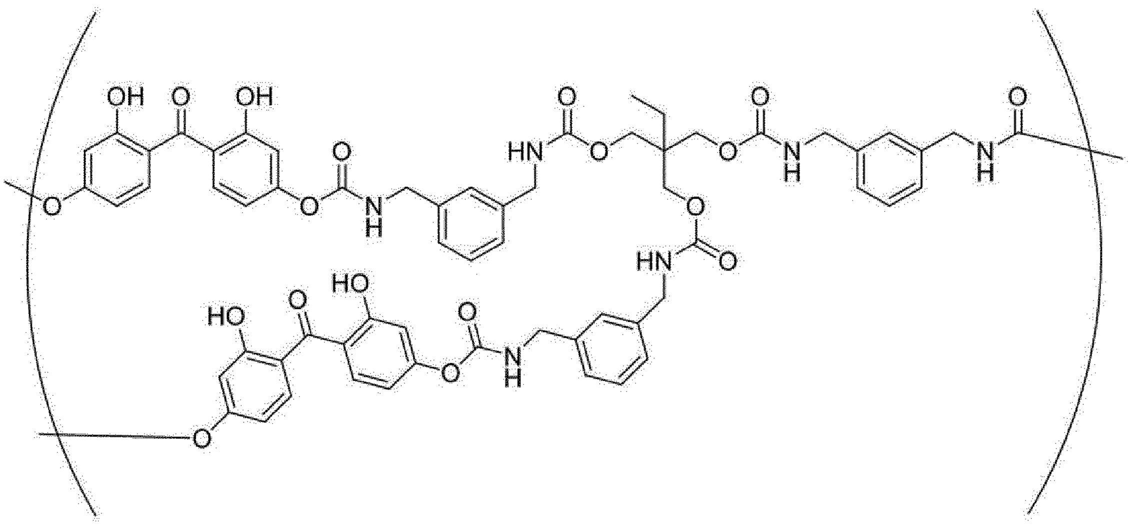

Example 2 of the main chain containing an ultraviolet absorbent skeleton (a case of polyurethane)

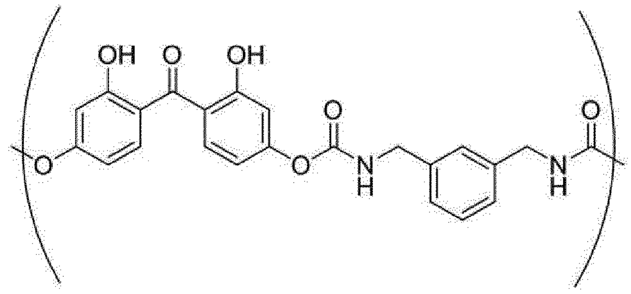

Example 3 of the main chain containing an ultraviolet absorbent skeleton (a case of polyester)

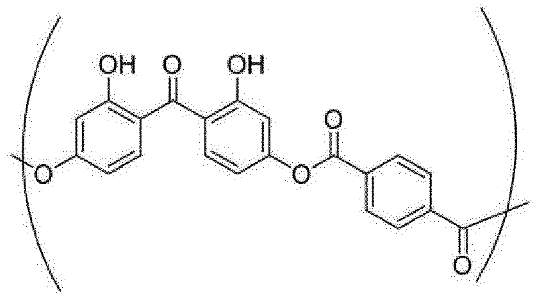

Example 4 of the main chain containing an ultraviolet absorbent skeleton (a case of melamine formaldehyde (polyaminoplast))

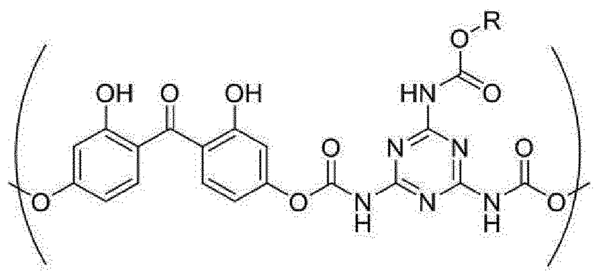

Example 5 of the main chain containing an ultraviolet absorbent skeleton (a case of urea-formaldehyde (polyaminoplast))

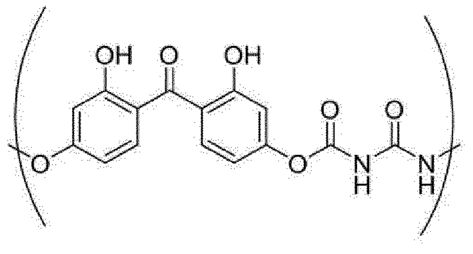

The shell part may contain a component other than the polymer depending on circumstances.

The thickness (the wall thickness) of the shell part (the wall) is preferably 0.01 μm to 10 μm and more preferably 0.02 μm to 5 μm.

The thickness (the wall thickness) of the shell part (the wall) refers to an average value obtained by obtaining the individual wall thicknesses (μm) of five microcapsules with a scanning electron microscope (SEM) and averaging the obtained thicknesses.

Specifically, a microcapsule solution is applied onto any support and dried to form a coating film. A cross-sectional section of the obtained coating film is prepared, a cross section of the coating film is observed using SEM, five microcapsules are randomly selected, and the cross section of each of the microcapsules is observed to measure wall

thicknesses, with which the average value is calculated.

In the microcapsule of the present disclosure, the proportion of the components constituting the shell part with respect to the total mass of the core part and the components constituting the shell part is preferably 75% by mass or less in terms of solid content.

The proportion of the components constituting the shell part in the microcapsule with respect to the total mass of the core part and the components constituting the shell part is adjusted by controlling the mass ratio of the components of the core material and the components of the shell material in a case of producing the microcapsule.

(Core part)

The microcapsule of the present disclosure encapsulates a coloring material as a core material, as one of the desired components in the shell part described above. The core material is a material that forms the core part encapsulated in the shell part.

- Coloring material -

The kind of coloring material is not particularly limited and may be any of a dye or a pigment.

As the dye, a known dye can be generally used. The dye may be any of a watersoluble dye or an oil-soluble dye, and an oil-soluble dye is preferable from the viewpoint of light fastness.

The pigment may be any of an organic pigment or an inorganic pigment.

The dye is not particularly limited, and examples thereof include various dyes such as an oil-soluble dye, a direct dye, an acidic dye, an edible dye, a basic dye, a reactive dye, a dispersed dye, a vat dye, a soluble vat dye, and a reactive dispersed dye.

The inorganic pigment is not particularly limited, and carbon black produced by a known method can be used.

The organic pigment is not particularly limited, and examples thereof include an azo pigment (including an azo lake, an insoluble azo pigment, a condensed azo pigment, a chelated azo pigment, and the like), a polycyclic pigment (for example, a phthalocyanine pigment, a perylene pigment, a perinone pigment, an anthraquinone pigment, a quinacridone pigment, a dioxazine pigment, a thioindigo pigment, an isoindolinone pigment, a quinophthalone pigment, and the like), a nitro pigment, a nitroso pigment, and aniline black.

The content of the coloring material in the core part is not particularly limited and may be appropriately selected according to the required color density, color tone, and the like.

The core part may contain a component other than the coloring material. Examples of the component other than the coloring material include a solvent, an oil component, an additive, and an unreacted reactant which is a raw material of the polymer that forms a shell part.

- Solvent -

As necessary, the core part may contain a solvent as the oil phase component for increasing the solubility of the wall material in the oil phase in a case of producing the microcapsule. In a case where the oil phase is allowed to contain microcapsules, the viscosity of the oil phase can be changed by adding a solvent to the oil phase. Since the degree of shear in emulsification changes depending on the viscosity of the oil phase, the coefficient of variation can be adjusted.

Examples of the solvent include a ketone-based compound such as methyl ethyl ketone, an ester-based compound such as ethyl acetate, and an alcohol-based compound such as isopropyl alcohol. The solvent referred to here means a liquid having a boiling point of 130°C or lower.

- Oil component -

The core part may contain an oil component. The oil component means a liquid having a boiling point of more than 130°C and is distinguished from the above solvent. Examples of the oil component include aromatic hydrocarbons such as caprylic/capric triglyceride, a fatty acid ester compound such as isopropyl myristate, an alkylnaphthalene-based compound such as diisopropylnaphthalene, a diaryl alkane-based compound such as 1-phenyl-1-xylyl ethane, an alkyl biphenyl-based compound such as isopropyl biphenyl, a triaryl methane-based compound, an alkylbenzene-based compound, a benzyl naphthalene-based compound, a diaryl alkylene-based compound, and an aryl indane-based compound; aliphatic hydrocarbons such as dibutyl phthalate and an isoparaffin; natural animal and vegetable oils such as camellia oil, soybean oil, corn oil, cottonseed oil, rapeseed oil, olive oil, palm oil, castor oil, and fish oil; and high boiling point fractions of natural substances such as mineral oil.

- Additive -

For example, an additive such as an ultraviolet absorbing agent, a light stabilizer, an antioxidant, a wax, or an odor suppressing agent can be encapsulated in the microcapsule, as necessary.
The additive can be contained within the range that does not significantly impair the effects of the present disclosure.

~ Microcapsule ~

The volume standard median diameter (D50) of microcapsules is preferably 0.05 μm to 100 μm, more preferably 0.07 μm to 70 μm, and still more preferably 0.1 μm to 50 μm.
In a case where the median diameter (D50) is 0.05 μm or more, it is possible to prevent the microcapsules from becoming difficult to be broken, and it is possible to suppress the amount of the shell material required to form the shell part to a low level and maintain the adhesion satisfactorily since the surface area of the particle does not become too large.
In a case where the median diameter (D50) is 100 μm or less, it is possible to prevent a decrease in attachability, and it is possible to maintain the adhesion satisfactorily since the microcapsule does not become too large and the excessive overlapping of the coloring material in the visibility direction in a case of observation is reduced.
The volume standard median diameter of microcapsules can be controlled by changing the dispersion conditions or the like.
The volume standard median diameter (D50) of microcapsules refers to a particle diameter of entire microcapsules, which is obtained when a cumulative volume of particles is 50% of the volume of the entire microcapsules in a case where the volumes of particles are accumulated from a particle having a small (or large) particle diameter. The volume standard median diameter of microcapsules can be measured using a particle diameter distribution measuring device.
In the microcapsule, the ratio (S/C) of the mass S of the shell part to the mass C of the core part is preferably 1/7 to 3/1, more preferably 1/6 to 2/1, still more preferably 1/3 to 1/1, even still more preferably 1/2 to 1/1, and particularly preferably 1/1.5 to 1/1.
In a case where the S/C is 3/1 or less, the adhesion becomes higher.
On the other hand, in a case where the S/C is 1/7 or more, the light fastness is excellent and the strength of the shell part is maintained high. Since the microcapsule of the present disclosure has a structure in which an ultraviolet absorbent skeleton is introduced into the main chain of the polymer in the shell part, the strength of the polymer itself is easily kept as compared with the conventional structure in which an ultraviolet absorbent skeleton is introduced into the side chain of the polymer. As a result, a large number of ultraviolet absorbent skeletons can be introduced, and thus the microcapsule has good strength even in a case where it is thin.
Both the mass C and the mass S are values calculated based on the amount of solid content.

~ Manufacturing method of microcapsules ~

The production of the microcapsule of the present disclosure varies depending on the kind of the polymer which is a shell material; however, in any case, it can be carried out based on the known method.
Hereinafter, a case of forming a shell that uses polyurethane, polyurea, or polyurethane urea as the polymer will be described as an example.
However, the present disclosure is not limited to the following method.
The microcapsule of the present disclosure can be produced by a method including dispersing an oil phase containing a solvent, a part of raw material compounds (for example, an isocyanate compound in a case where a polymer is polyurethane) for forming a polymer which is a shell material, a coloring material, and, as necessary, another core material in a water phase to prepare an emulsified liquid (a first step); adding, as necessary, another part of the raw material compounds (for example, a polyol or a polyamine in the above case) to the emulsified liquid (a second step); and polymerizing components for forming the shell material at an interface between the oil phase and the water phase to form a shell part and then producing a microcapsule that encapsulates a core material that forms a core part (a third step).

[First step]

In the first step, an oil phase containing a solvent, a part of components for forming the shell material, and a core material such as a coloring material is dispersed in a water phase, whereby an emulsified liquid can be prepared.
In a case where the oil phase contains a solvent, the monodispersibility of the microcapsule is increased.
The emulsified liquid in the present disclosure can be prepared by adding and dispersing an oil phase containing

a solvent, a part of components for forming the shell material, and a coloring material in a water phase containing at least water.

(Oil phase)

The oil phase in the present disclosure preferably contains at least a solvent, a part of components for forming the shell material (an isocyanate compound in a case where the polymer is a urethane-based polymer or a urea-based polymer), a coloring material, and an ultraviolet absorbent compound, and, as necessary, another component such as an oil component or an additive may be contained.
The solvent and the components for forming the shell material, which can be used in the first step, are as described in the above-described section of the microcapsule. The details of the oil component and the additive are as described in the above-described section of the microcapsule.
The content of the oil phase of the coloring material in the solid content is not particularly limited and may be appropriately selected depending on the required parameters such as the color density and the color tone, and can be, for example, 5% by mass to 90% by mass.
The concentration of the part of components for forming the shell material in the oil phase can be appropriately adjusted in consideration of the particle size and the wall thickness of the microcapsule.
For example, in a case where polyurethane, polyurea, or polyurethane urea is used as the shell material, the content of the isocyanate compound in the oil phase can be appropriately adjusted depending on the particle size, the wall thickness, and the like of the microcapsule. The content of the isocyanate compound in the oil phase can be, for example, in a range of 1% by mass to 80% by mass, preferably 2% by mass to 50% by mass, and more preferably 3% by mass to 30% by mass, with respect to the total mass of the oil phase.

(Water phase)

The water phase in the present disclosure preferably contains at least an aqueous medium, and more preferably contains an emulsifying agent.

- Aqueous medium -

Examples of the aqueous medium include water and a mixed solvent of water and a hydrophilic organic solvent, and ion exchange water can be used.
The content of the aqueous medium in the water phase is preferably 20% by mass to 98% by mass, more preferably 30% by mass to 95% by mass, still more preferably 50% by mass to 90% by mass, with respect to the total mass of the emulsified liquid obtained by emulsifying and dispersing the oil phase in the water phase.

- Emulsifying agent -

Examples of the emulsifying agent include a dispersing agent, a surfactant, and a combination thereof.
Examples of the dispersing agent include a polyvinyl alcohol and a modified product (for example, an anionic modified polyvinyl alcohol) thereof, a polyacrylic acid amide and a derivative thereof, an ethylene-vinyl acetate copolymer, a styrene-maleic anhydride copolymer, an ethylene-maleic anhydride copolymer, an isobutylene-maleic anhydride copolymer, polyvinylpyrrolidone, an ethylene-acrylic acid copolymer, a vinyl acetate-acrylic acid copolymer, carboxymethyl cellulose, methyl cellulose, casein, gelatin, a starch derivative, gum arabic, and sodium alginate, and polyvinyl alcohol is preferable.
It is preferable that the dispersing agent does not react or hardly reacts with the shell material. For example, in a case of a dispersing agent having a reactive amino group in the molecular chain, such as gelatin, a treatment of eliminating reactivity is preferably carried out in advance.
Examples of the surfactant include a nonionic surfactant, an anionic surfactant, a cationic surfactant, and an amphoteric surfactant. The surfactant may be used alone, or two or more thereof may be used in combination.
The nonionic surfactant is not particularly limited, and a conventionally known nonionic surfactant can be used.
Examples of the nonionic surfactant include a polyoxyethylene alkyl ether-based compound, a polyoxyethylene alkyl phenyl ether-based compound, a polyoxyethylene polystyryl phenyl ether-based compound, a polyoxyethylene polyoxypropylene alkyl ether-based compound, a glycerin fatty acid partial ester-based compound, a sorbitan fatty acid partial ester-based compound, a pentaerythritol fatty acid partial ester-based compound, a propylene glycol monofatty acid ester-based compound, a sucrose fatty acid partial ester-based compound, a polyoxyethylene sorbitan fatty acid partial ester-based compound, a polyoxyethylene sorbitol fatty acid partial ester-based compound, a polyethylene glycol fatty acid ester-based compound, a polyglycerin fatty acid partial ester-based compound, a polyoxyethylenated castor

oil compound, a polyoxyethylene glycerin fatty acid partial ester-based compound, a fatty acid diethanolamide-based compound, an N,N-bis-2-hydroxyalkylamine-based compound, a polyoxyethylene alkylamine, a triethanolamine fatty acid ester, a trialkylamine oxide, a polyethylene glycol, and a copolymer of polyethylene glycol and polypropylene glycol.

The anionic surfactant is not particularly limited, and a conventionally known anionic surfactant can be used.

Examples of the anionic surfactant include a fatty acid salt, an abietiate, a hydroxyalkane sulfonate, an alkane sulfonate, a dialkylsulfosuccinate ester salt, a linear alkylbenzene sulfonate, a branched alkylbenzene sulfonate, an alkylnaphthalene sulfonate, an alkylphenoxypolyoxyethylene propyl sulfonate, a polyoxyethylene alkylsulfophenyl ether salt, an N-methyl-N-oleyl taurine sodium salt, an N-alkylsulfosuccinate monoamide disodium salt, a petroleum sulfonate, a sulfated beef tallow oil, a sulfuric acid salt of a fatty acid alkyl ester, an alkylsulfate ester salt, a polyoxyethylene alkyl ether sulfate ester salt, a fatty acid monoglyceride sulfate ester salt, a polyoxyethylene alkylphenyl ether sulfate ester salt, a polyoxyethylene styrylphenyl ether sulfuric acid salt, an alkyl phosphate ester salt, a polyoxyethylene alkyl ether phosphate ester salt, a polyoxyethylene alkyl phenyl ether phosphate ester salt, a partial saponified product of a styrene-maleic anhydride copolymer, a saponified product of an olefin-maleic anhydride copolymer, a naphthalene sulfonate formalin condensate, a salt of alkylpolyoxyalkylene sulfoalkyl ether, and a salt of an alkenylpolyoxyalkylene sulfoalkyl ether.

The cationic surfactant is not particularly limited, and a conventionally known cationic surfactant can be used.

Examples of the cationic surfactant include an alkylamine salt, a quaternary ammonium salt (for example, hexadecyltrimethylammonium chloride), a polyoxyethylene alkylamine salt, and a polyethylene polyamine derivative.

The amphoteric surfactant is not particularly limited, and a conventionally known amphoteric surfactant can be used.

Examples of the amphoteric surfactant include carboxybetaine, aminocarboxylic acid, sulfobetaine, aminosulfate, and imidazoline.

The concentration of the emulsifying agent is preferably more than 0% by mass and 20% by mass or less, more preferably 0.005% by mass to 15% by mass, and still more preferably 0.01% by mass to 10% by mass with respect to the total mass of the emulsified liquid which is a mixture of the oil phase and the water phase.

The water phase may contain another component such as an ultraviolet absorbing agent, an antioxidant, or a preservative, as necessary. In a case where another component is contained, the content thereof is preferably more than 0% by mass and 20% by mass or less with respect to the total mass of the water phase.

(Dispersion)

Dispersion (emulsification) refers to dispersing an oil phase as oil droplets in a water phase. The dispersion can be carried out using a commonly used device for dispersing an oil phase and a water phase, such as a homogenizer, a Manton Gorey, an ultrasonic wave disperser, a dissolver, a keddy mill, or other known dispersion apparatus.

The mixing ratio of the oil phase to the water phase (oil phase / water phase; based on the mass) is preferably 0.1 to 1.5, more preferably 0.2 to 1.2, and still more preferably 0.4 to 1.0. In a case where the mixing ratio is within the above range, the viscosity can be maintained at a suitable level, the production suitability is excellent, and the stability of the emulsified liquid is excellent.

[Second step]

After the above first step, as necessary, a step of adding another part of components for forming the shell material (for example, a polyol or a polyamine in a case where the polymer is a urethane-based polymer or a urea-based polymer) to the emulsified liquid obtained in the first step may be provided.

The other part of components for forming the shell material, which can be used in the first step, are as described in the above-described section of the microcapsule.

For example, in a case where polyurethane, polyurea, or polyurethane urea is used as the shell material, the total content of the polyol and the polyamine in the oil phase can be appropriately adjusted depending on the particle size, the wall thickness, and the like of the microcapsule. The total content of the polyol and the polyamine in the oil phase can be in a range of 1% by mass to 30% by mass, and it is preferably 3% by mass to 20% by mass and more preferably 5% by mass to 15% by mass, with respect to the isocyanate compound which is a part of components for forming the shell material.

[Third step]

In the third step, components for forming a shell material are polymerized at an interface between the oil phase and the water phase to form a shell part, and then a microcapsule that encapsulates a core material that forms a core part is produced.

The polymerization is a step of polymerizing components for forming the shell material contained in the emulsified liquid at the interface between the oil phase and the water phase, whereby a shell is formed. The polymerization is preferably carried out under heating. The reaction temperature in the polymerization is usually preferably 30°C to 100°C and more preferably 40°C to 80°C. The polymerization reaction time is usually preferably about 0.5 hours to 10 hours and more preferably about 1 hour to 5 hours. The higher the polymerization temperature, the shorter the polymerization time. However, in a case of using a core material or a shell material, which may decompose at a high temperature, it is preferable to select a polymerization initiator that acts at a low temperature and carry out polymerization at a relatively low temperature.
In order to prevent the aggregation of microcapsules during the polymerization step, it is preferable to further add an aqueous solution (for example, water or an aqueous acetic acid solution) to reduce the collision probability between the microcapsules, and it is also preferable to carry out sufficient stirring. A dispersing agent for preventing aggregation may be added again during the polymerization step. Further, as necessary, a charge regulating agent such as nigrosine or any other auxiliary agent can be added. This auxiliary agent can be added at the time of the shell formation or at any timing.

<Microcapsule composition>

The microcapsule composition of the present disclosure contains the above-described microcapsule of the present disclosure and a solvent. In a case where the core part of the microcapsules contains a solvent, the solvent contained in the microcapsule composition may be the same as or different from the solvent contained in the core part of the microcapsule. The solvent contained in the microcapsule composition means a solvent that is present outside the microcapsule and is distinguished from the solvent contained in the core part of the microcapsule.

- Solvent -

The solvent contained in the microcapsule composition is suitably a water-based solvent.
In a case the microcapsule composition contains a solvent, the microcapsule composition can be easily blended in a case of being used for various use applications. Examples of the water-based solvent include water and a mixed solvent of water and a hydrophilic organic solvent.
The content of the solvent in the microcapsule composition can be appropriately selected depending on the intended purpose or the use application.

- Dispersion medium -

The microcapsule-containing composition can contain a dispersion medium other than the above-described solvent, which disperses the microcapsules. In a case where the microcapsule composition contains a dispersion medium, the microcapsule composition can be easily blended in a case of being used for various use applications.
The dispersion medium here can be appropriately selected according to the intended application of the composition and is preferably a liquid component that does not affect the shell material of the microcapsule. Examples of the preferred dispersion mediums include a viscosity-adjusting agent or a stabilizer.
The content of the dispersion medium in the microcapsule composition may be appropriately selected depending on the intended purpose or the use application.

- Other components -

The microcapsule composition can contain other components in addition to the microcapsule, the solvent, and the dispersion medium.
The other components are not particularly limited and may be appropriately selected depending on the intended purpose or necessity. Examples of the other components include a surfactant, a cross linking agent, a lubricant, an ultraviolet absorbing agent, an antioxidant, and an antistatic agent.

<Ink composition, paint, resin composition>

Due to having excellent light fastness, high adhesion, and high strength, the microcapsule of the present disclosure can be suitably used in use applications such as a use application that requires light fastness, a use application that is applied in use environments where an external force is applied, or a use application that requires a good color shade and a good color tone.
As the specific example, the microcapsule of the present disclosure is suitable for, for example, an ink composition, a paint, or a resin composition.

The ink composition of the present disclosure contains the above-described microcapsule of the present disclosure and a solvent.

Since the details of the microcapsule are as described above, the description thereof is omitted here.

As the solvent, water and an organic solvent that are generally used for ink can be appropriately selected and used, and examples thereof include water, an organic solvent, and a mixed solvent thereof. Examples of the organic solvent include monohydric alcohols; polyhydric alcohols such as ethylene glycol, diethylene glycol, triethylene glycol, polyethylene glycol, polypropylene glycol, and propylene glycol; alkyl ethers of polyhydric alcohols, such as ethylene glycol monoethyl ether, ethylene glycol monobutyl ether, and diethylene glycol monomethyl ether; urea; and 2-pyrrolidone and N-methyl-2-pyrrolidone.

The content of the solvent is not particularly limited and may be appropriately selected depending on the intended purpose, the form of use, and the like.

The paint of the present disclosure contains the above-described microcapsule of the present disclosure and a solvent.

Since the details of the microcapsule are as described above, the description thereof is omitted here.

As the solvent, an organic solvent that is generally used for a paint can be appropriately selected and used. The content of the solvent is not particularly limited and may be appropriately selected depending on the intended purpose, the form of use, and the like.

The resin composition of the present disclosure contains the above-described microcapsule of the present disclosure and a resin.

Since the details of the microcapsule are as described above, the description thereof is omitted here.

The resin is not particularly limited and may be appropriately selected depending on the intended purpose and the use application, and examples thereof include polyolefin, polyester, polyurethane, and polyamide. The content of the resin is not particularly limited and may be appropriately selected depending on the intended purpose, the form of use, and the like.

Examples

Hereinafter, the present disclosure will be described in more detail with reference to Examples. However, the present disclosure is not limited to the following Examples as long as the gist of the present disclosure is not exceeded.

The ratio of the mass S of the shell part to the mass C of the core part is denoted by "S/C".

In addition, as the volume standard median diameter (D50) of microcapsules, a particle diameter, which is obtained when a cumulative volume of particles is 50% of the volume of the entire microcapsules in a case where the volumes of particles are accumulated from a particle having a small (or large) particle diameter, was obtained using the Microtrac MT3300EXII (manufactured by Nikkiso Co., Ltd.).

The abbreviations that are used in present Examples respectively mean the compounds shown below.

In addition, "Me" in the structural formula indicates a methyl group.

- Benzophenone 1: 2,2',4,4'-tetrahydroxybenzophenone
- Benzophenone 2: 2,3,4-trihydroxybenzophenone
- Benzophenone 3: 2,4,4'-trihydroxybenzophenone

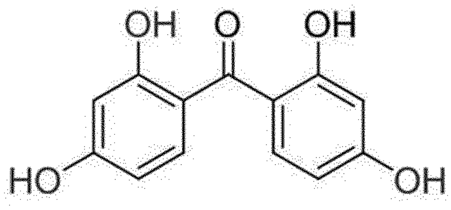

Benzophenone 1

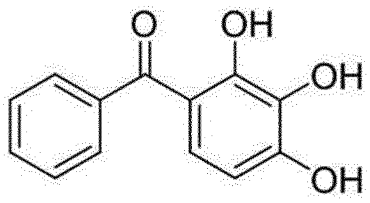

Benzophenone 2

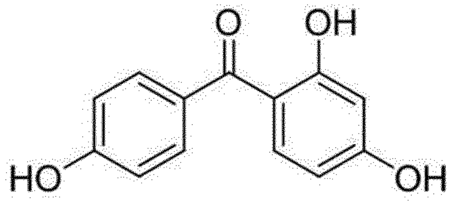

Benzophenone 3

· Benzophenone 4: 2,2'-dihydroxy-4,4'-dimethoxybenzophenone

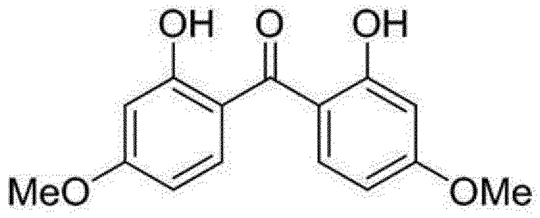

Benzophenone 4

· Triazine 1: 2,4,6-tris(2,4-dihydroxy-3-methylphenyl)-1,3,5-triazine

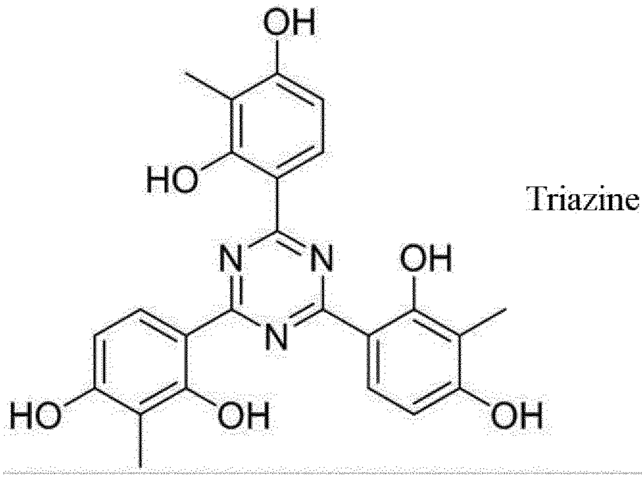

Triazine 1

· Benzotriazole 1: 2-(2'-hydroxy-3'-aminophenyl)-5-hydroxybenzotriazole

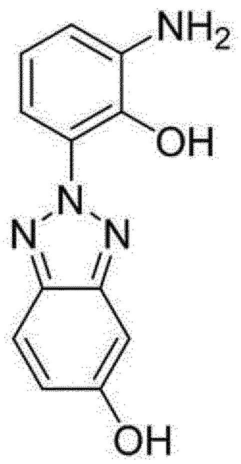

Benzotriazole 1

(Reference example)

Before preparing microcapsules, a preliminary experiment was carried out to confirm that a polymer having an ultraviolet absorbent skeleton in the main chain thereof was obtained.

0.5 g of 2,2',4,4'-tetrahydroxybenzophenone (benzophenone 1; the benzophenone compound represented by Formula (1) described above), which is an ultraviolet absorbent compound, was added to 5 g of ethyl acetate and dissolved. 2.0 g of a trimethylolpropane adduct body of metaxylylene diisocyanate (product name "TAKENATE D-110N", manufactured by Mitsui Chemicals MC Co., Ltd.) was added thereto, and the resultant mixture was stirred for 2 hours, and a white precipitate was generated. From this result, it was confirmed that 2,2',4,4'-tetrahydroxybenzophenone reacts with the trimethylolpropane adduct body of metaxylylene diisocyanate, and a polymer having a skeleton derived from 2,2',4,4'-tetrahydroxybenzophenone in the main chain thereof is formed.

For comparison with the above case, the same preliminary experiment was carried out by changing 2,2',4,4'-tetrahydroxybenzophenone to 2,2'-dihydroxy-4,4'-dimethoxybenzophenone (the benzophenone 4), and no precipitate was generated. That is, it is conceived that 2,2'-dihydroxy-4,4'-dimethoxybenzophenone does not react with the trimethylolpropane adduct body of metaxylylene diisocyanate or the reaction is very slow. In this case, it was determined that a polymer having a skeleton derived from 2,2'-dihydroxy-4,4'-dimethoxybenzophenone in the main chain thereof was not formed.

(Example 1)

10 g of ethyl acetate was put in a 20 mL beaker, 2.0 g of Sudan Black B (product name "Solvent Black 3", manufactured by FUJIFILM Wako Pure Chemical Corporation), and 0.6 g of 2,2',4,4'-tetrahydroxybenzophenone (the benzophenone 1) were added thereto and dissolved. 1.4 g of a trimethylolpropane adduct body of metaxylylene diisocyanate (product name "TAKENATE D-110N", manufactured by Mitsui Chemicals MC Co., Ltd.: a trifunctional or higher functional isocyanate compound) was added thereto, and the resultant mixture was stirred for 10 minutes. This solution is denoted by a solution A.

Next, the solution A was added to 30.0 g of an aqueous solution containing 3% by mass of polyvinyl alcohol (product name "PVA-217", manufactured by KURARAY Co., Ltd.), and the resultant mixture was homogenized at 3,000 revolutions per minute (rpm) for 10 minutes using a homogenizer (product name "Excel Auto Homogenizer ED-7", manufactured by Nippon Seiki Seisakusho Co., Ltd.). This solution is denoted by a solution B.

Then, the solution B was transferred to a 200 mL eggplant flask and stirred at 400 rpm. While stirring the solution B, 2.0 g of an aqueous solution containing 10% by mass of diethylenetriamine was added dropwise to the solution B over 5 minutes. Then, the temperature was raised to 50°C under a nitrogen stream, and the mixture was stirred at 50°C for 90 minutes. After 90 minutes, the temperature was raised to 80°C, and the mixture was stirred at 80°C for 2 hours to distill off ethyl acetate.

After cooling to room temperature, 30 g of an ink containing microcapsules and having an S/C of 1/1, was obtained.

Based on the preliminary experiment in the above reference example, it was confirmed that the shell part of the microcapsule is formed of a polyurethane urea having a skeleton (an ultraviolet absorbent skeleton) derived from 2,2',4,4'-tetrahydroxybenzophenone in the main chain thereof.

The volume standard median diameter (D50) of microcapsules was 0.15 μm.

(Example 2)

10 g of ethyl acetate was put in a 20 mL beaker, 2.0 g of Sudan Black B (product name "Solvent Black 3", manufactured by FUJIFILM Wako Pure Chemical Corporation), and 0.6 g of 2,2',4,4'-tetrahydroxybenzophenone) were added thereto and dissolved. This solution is denoted by a solution A.

15 g of ethyl acetate was placed in another 20 mL beaker, and 1.4 g of terephthaloyl chloride was added thereto and dissolved. This solution is denoted by a solution B.

Then, solution B was added to solution A and mixed. This mixed solution is denoted by a solution C.

Next, 2 g of a nonionic surfactant (product name "BL-9EX", manufactured by Nikko Chemicals Co., Ltd.) and 1 g of sodium carbonate were dissolved to 30 g of water, the solution C was subsequently added, and the resultant mixture was homogenized at 3,000 rpm for 10 minutes using a homogenizer (product name "Excel Auto Homogenizer ED-7", manufactured by Nippon Seiki Seisakusho Co., Ltd.). This solution is denoted by a solution D.

The solution D was transferred to a 200 mL eggplant flask and stirred at 400 rpm. While stirring the solution D, 5.0 g of an aqueous solution containing 20% by mass of ethylene glycol was added dropwise to the solution D over 5 minutes. Then, the temperature was raised to 80°C, and the mixture was stirred at 80°C for 2 hours to distill off ethyl acetate.

After cooling to room temperature, 35 g of an ink containing microcapsules and having an S/C of 1/1, was obtained.

The same preliminary experiment as that in the above reference example was carried out, and it was confirmed that the shell part of the microcapsule is formed of a polyester having a skeleton (an ultraviolet absorbent skeleton) derived from 2,2',4,4'-tetrahydroxybenzophenone in the main chain thereof.

The volume standard median diameter (D50) of microcapsules was 0.20 μm.

(Example 3)

10 g of ethyl acetate was put in a 20 mL beaker, 2.0 g of Sudan Black B (product name "Solvent Black 3", manufactured by FUJIFILM Wako Pure Chemical Corporation), and 0.6 g of 2,2',4,4'-tetrahydroxybenzophenone) were added thereto and dissolved. 1.4 g of an epoxy resin (product name "Grade 828", manufactured by Mitsubishi Chemical Corporation) was added thereto. This solution is denoted by a solution A.

Next, the solution A was added to 40.0 g of an aqueous solution containing 10 % by mass of gelatin, and the resultant mixture was homogenized at 3,000 rpm for 10 minutes using a homogenizer (product name "Excel Auto Homogenizer ED-7", manufactured by Nippon Seiki Seisakusho Co., Ltd.). This solution is denoted by a solution B. The solution B was transferred to a 200 mL eggplant flask and stirred at 400 rpm.

While stirring the solution B, an aqueous solution obtained by dissolving 0.8 g of an epoxy resin curing agent (product name "Grade U", manufactured by Mitsubishi Chemical Corporation) in 6 g of water was added dropwise to the solution B. Then, the temperature was raised to 75°C, the mixture was stirred at 75°C for 5 hours, the temperature was raised to 80°C, and the mixture was stirred at 80°C for 2 hours to distill off ethyl acetate.

After cooling to room temperature, 40 g of an ink containing microcapsules and having an S/C of 1/1, was obtained.

The same preliminary experiment as that in the above reference example was carried out, and it was confirmed that the shell part of the microcapsule is formed of a polyether having a skeleton (an ultraviolet absorbent skeleton) derived from 2,2',4,4'-tetrahydroxybenzophenone in the main chain thereof.

The volume standard median diameter (D50) of microcapsules was 0.25 μm.

(Example 4)

An ink containing microcapsules and having an S/C of 1/2 was obtained by the same method as in Example 1 except that the amount of Sudan Black B in Example 1 was changed to 4.0 g and the amount of ethyl acetate was changed to 20 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 5)

An ink containing microcapsules and having an S/C of 1/1 was obtained by the same method as in Example 1 except that the amount of 2,2',4,4'-tetrahydroxybenzophenone in Example 1 was changed to 0.3 g and the amount of trimethylolpropane adduct body of metaxylylene diisocyanate was changed to 1.7 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 6)

An ink containing microcapsules and having an S/C of 1/1 was obtained by the same method as in Example 1 except that the amount of 2,2',4,4'-tetrahydroxybenzophenone in Example 1 was changed to 1.0 g and the amount of trimethylolpropane adduct body of metaxylylene diisocyanate was changed to 1.0 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 7)

An ink containing microcapsules and having an S/C of 1/1 was obtained by the same method as in Example

1 except that the amount of 2,2',4,4'-tetrahydroxybenzophenone in Example 1 was changed to 1.3 g and the amount of trimethylolpropane adduct body of metaxylylene diisocyanate was changed to 0.7 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 8)

An ink containing microcapsules and having an S/C of 2/5 was obtained by the same method as in Example 1 except that the amount of Sudan Black B in Example 1 was changed to 5.0 g and the amount of ethyl acetate was changed to 25 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 9)

An ink containing microcapsules and having an S/C of 2/1 was obtained by the same method as in Example 1 except that the amount of 2,2',4,4'-tetrahydroxybenzophenone in Example 1 was changed to 1.2 g and the amount of trimethylolpropane adduct body of metaxylylene diisocyanate was changed to 2.8 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 10)

An ink containing microcapsules and having an S/C of 1/2 was obtained by the same method as in Example 2 except that the amount of Sudan Black B in Example 2 was changed to 4.0 g and the amount of ethyl acetate was changed to 20 g.

The same preliminary experiment as that in the above reference example was carried out, and it was confirmed that the shell part of the microcapsule is formed of a polyester having a skeleton (an ultraviolet absorbent skeleton) derived from 2,2',4,4'-tetrahydroxybenzophenone in the main chain thereof.

(Example 11)

An ink containing microcapsules and having an S/C of 1/7 was obtained by the same method as in Example 1 except that, in Example 1, the amount of Sudan Black B was changed to 14.0 g, the amount of ethyl acetate was changed to 56 g, the amount of 2,2',4,4'-tetrahydroxybenzophenone was changed to 1.3 g, and the amount of trimethylolpropane adduct body of metaxylylene diisocyanate was changed to 0.7 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 12)

An ink containing microcapsules and having an S/C of 1/2 was obtained by the same method as in Example 1 except that the amount of Sudan Black B was changed to 4.0 g, the amount of 2,2',4,4'-tetrahydroxybenzophenone in Example 1 was changed to 0.8 g and the amount of trimethylolpropane adduct body of metaxylylene diisocyanate was changed to 1.2 g.

The same preliminary experiment as that in the above reference example was carried out, and it was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 13)

An ink containing microcapsules and having an S/C of 1/3 was obtained by the same method as in Example 1 except that the amount of Sudan Black B was changed to 6.0 g, the amount of 2,2',4,4'-tetrahydroxybenzophenone in Example 1 was changed to 1.0 g and the amount of trimethylolpropane adduct body of metaxylylene diisocyanate

was changed to 1.0 g. It was confirmed that the shell part of the microcapsule is formed of a polyurethane urea having a skeleton (an ultraviolet absorbent skeleton) derived from 2,2',4,4'-tetrahydroxybenzophenone in the main chain thereof.

(Example 14)

An ink containing microcapsules and having an S/C of 1/1 was obtained by the same method as in Example 5 except that 2,2',4,4'-tetrahydroxybenzophenone in Example 5, which is an ultraviolet absorbent compound, was changed to the triazine 1.

The same preliminary experiment as that in the above reference example was carried out, and it was confirmed that the shell part of the microcapsules is formed of a polyurethane urea having a skeleton (an ultraviolet absorbent skeleton) derived from 2,4,6-tris(2,4-dihydroxy-3-methylphenyl)-1,3,5-triazine in the main chain thereof.

The volume standard median diameter (D50) of microcapsules was 0.22 μm.

(Example 15)

An ink containing microcapsules and having an S/C of 1/1 was obtained by the same method as in Example 5 except that 2,2',4,4'-tetrahydroxybenzophenone in Example 5, which is an ultraviolet absorbent compound, was changed to the benzotriazole 1.

The same preliminary experiment as that in the above reference example was carried out, and it was confirmed that the shell part of the microcapsules is formed of a polyurethane urea having a skeleton (an ultraviolet absorbent skeleton) derived from 2-(2'-hydroxy-3'-aminophenyl)-5-hydroxybenzotriazole in the main chain thereof.

The volume standard median diameter (D50) of microcapsules was 0.25 μm.

(Example 16)

An ink containing microcapsules and having an S/C of 1/1 was obtained by the same method as in Example 2 except that 2,2',4,4'-tetrahydroxybenzophenone in Example 2, which is an ultraviolet absorbent compound, was changed to the benzotriazole 1, the amount of which was set to 0.3 g, and the amount of terephthaloyl chloride was changed to 1.7g.

The same preliminary experiment as that in the above reference example was carried out, and it was confirmed that the shell part of the microcapsules is formed of a polyester having a skeleton (an ultraviolet absorbent skeleton) derived from 2-(2'-hydroxy-3'-aminophenyl)-5-hydroxybenzotriazole in the main chain thereof.

The volume standard median diameter (D50) of microcapsules was 0.23 μm.

(Example 17)

An ink containing microcapsules and having an S/C of 1/1 was obtained by the same method as in Example 3 except that 2,2',4,4'-tetrahydroxybenzophenone in Example 3 was changed to the triazine 1, the amount of which was set to 0.3 g, and the amount of the epoxy resin was changed to 1.7g.

The same preliminary experiment as that in the above reference example was carried out, and it was confirmed that the shell part of the microcapsules is formed of a polyether having a skeleton (an ultraviolet absorbent skeleton) derived from 2,4,6-tris(2,4-dihydroxy-3-methylphenyl)-1,3,5-triazine in the main chain thereof.

The volume standard median diameter (D50) of microcapsules was 0.24 μm.

(Example 18)

An ink containing microcapsules and having an S/C of 1/1 was obtained by the same method as in Example 1 except that 2,2',4,4'-tetrahydroxybenzophenone in Example 1, which is an ultraviolet absorbent compound, was changed to the benzophenone 2 (2,3,4-trihydroxybenzophenone; the benzophenone compound represented by Formula (1)).

The same preliminary experiment as that in the above reference example was carried out, and it was confirmed that the shell part of the microcapsule is formed of a polyurethane urea having a skeleton (an ultraviolet absorbent skeleton) derived from 2,3,4-trihydroxybenzophenone in the main chain thereof.

The volume standard median diameter (D50) of microcapsules was 0.18 μm.

(Example 19)

An ink containing microcapsules and having an S/C of 1/1 was obtained by the same method as in Example

1 except that 2,2',4,4'-tetrahydroxybenzophenone in Example 1, which is an ultraviolet absorbent compound, was changed to the benzophenone 3 (2,4,4'-trihydroxybenzophenone; the benzophenone compound represented by Formula (1)).

The same preliminary experiment as that in the above reference example was carried out, and it was confirmed that the shell part of the microcapsule is formed of a polyurethane urea having a skeleton (an ultraviolet absorbent skeleton) derived from 2,4,4'-trihydroxybenzophenone in the main chain thereof.

The volume standard median diameter (D50) of microcapsules was 0.15 μm.

(Comparative Example 1)

5.0 g of styrene, 3.5 g of butyl acrylate, 0.5 g of methacrylic acid, and 1.0 g of 2-[3-(2H-benzotriazol-2-yl)-4-hydroxyphenyl]ethyl methacrylate were added in a 50 mL beaker and mixed. A solution obtained by dissolving 10.0 g of Sudan Black B in 40 g of ethyl acetate was added thereto. This solution is denoted by a solution A.

The solution A was added to an aqueous solution obtained by dissolving 1.5 g of sodium dodecylbenzenesulfonate in 40.0 g of water, and the resultant mixture was homogenized at 12,000 rpm for 15 minutes using a homogenizer (product name "Excel Auto Homogenizer ED-7", manufactured by Nippon Seiki Seisakusho Co., Ltd.). This solution is denoted by a solution B.

Next, 1.0 g of sodium dodecylbenzenesulfonate and 60.0 g of water were placed in a 100 mL eggplant flask, and the resultant mixture was stirred at 250 rpm and heated to 65°C. After the temperature was raised, 0.2 g of potassium persulfate was added, and the solution B was added dropwise thereto over 5 minutes. After stirring at 65°C for 4 hours, 0.2 g of potassium persulfate was added thereto, the temperature was raised to 80°C, and the mixture was stirred at 80°C for 4 hours. After 4 hours, the solution was cooled to room temperature, and an aqueous solution containing 50% by mass of potassium hydroxide was added to adjust the pH of the solution to 8.3. As a result, 105 g of an ink containing microcapsules and having an S/C of 1/1, was obtained.

(Comparative Example 2)

5.0 g of styrene, 3.5 g of butyl acrylate, 0.5 g of methacrylic acid, and 1.0 g of 2-[3-(2H-benzotriazol-2-yl)-4-hydroxyphenyl]ethyl methacrylate were added in a 20 mL beaker and mixed. A solution obtained by dissolving 2.0 g of Sudan Black B in 40 g of ethyl acetate was added thereto. This solution is denoted by a solution A.

The solution A was added to an aqueous solution obtained by dissolving 0.4 g of sodium dodecylbenzenesulfonate in 10.0 g of water, and the resultant mixture was homogenized at 12,000 rpm for 15 minutes using a homogenizer (product name "Excel Auto Homogenizer ED-7", manufactured by Nippon Seiki Seisakusho Co., Ltd.). This solution is denoted by a solution B.

Next, 0.1 g of sodium dodecylbenzenesulfonate and 20.0 g of water were placed in a 100 mL eggplant flask, and the resultant mixture was stirred at 250 rpm and heated to 65°C. After the temperature was raised, 0.2 g of potassium persulfate was added, and the solution B was added dropwise thereto over 5 minutes. After stirring at 65°C for 4 hours, 0.2 g of potassium persulfate was added thereto, and the mixture was stirred at 65°C for 1 hour. After 1 hour, the solution was cooled to room temperature, and an aqueous solution containing 50% by mass of potassium hydroxide was added to adjust the pH of the solution to 8.3. As a result, 35 g of an ink containing microcapsules and having an S/C of 5/1, was obtained.

(Comparative Example 3)

The same method as in Comparative Example 1 was carried out except that, in Comparative Example 1, the amount of styrene was changed from 5.0 g to 4.0 g, and the amount of 2-[3-(2H-benzotriazol-2-yl)-4-hydroxyphenyl]ethyl methacrylate was changed from 1.0 g to 2.0 g.

An attempt was made to prepare an ink containing microcapsules having an S/C of 1/1 by the above method; however, the ink could not be prepared since the two layers of the oil layer and the water layer were separated in the middle of the preparation.

(Comparative Example 4)

An ink containing microcapsules and having an S/C of 1.7/1 was obtained by the same method as in Example 1 except that, in Example 1, 2,2',4,4'-tetrahydroxybenzophenone which is an ultraviolet absorbent compound was not added, 0.6 g of 2,2',4,4'-tetrahydroxybenzophenone was changed to 2.0 g of trimethylolpropane adduct body of metaxylylene diisocyanate (product name "TAKENATE D-110N", manufactured by Mitsui Chemicals MC Co., Ltd.)

The shell part of the microcapsule is made of polyurethane urea.

[Comparative Example 5]

The same method as in Example 1 was carried out except that, in Example 1, 2,2',4,4'-tetrahydroxybenzophenone which is an ultraviolet absorbent compound was changed to the benzophenone 4 (2,2'-dihydroxy-4,4'-dimethoxybenzophenone), thereby obtaining an ink containing microcapsules and having an S/C of 0.7/1.
As confirmed in the above reference example, since the polymer having a skeleton derived from 2,2'-dihydroxy-4,4'-dimethoxybenzophenone in the main chain thereof was not formed, it is conceived that 2,2'-dihydroxy-4,4'-dimethoxybenzophenone is present in the core part of the microcapsule.
The shell part of the microcapsule is made of polyurethane urea.

[Evaluation]

Next, the light fastness, the adhesion, and the strength were evaluated using the inks obtained in Examples and Comparative Examples. The evaluation method is as follows.
The evaluation results are shown in Table 1.
Table 1 shows the kinds of polymers that form the shell part of the microcapsule contained in the inks prepared in Examples and Comparative Examples, the kinds of ultraviolet absorbent skeletons or ultraviolet absorbent groups, which the polymers have, the position of the ultraviolet absorbent skeleton or ultraviolet absorbent group in the polymer, the mass ratio of the ultraviolet absorbent skeleton or ultraviolet absorbent group to the coloring material, and the S/C.
It is noted that "-" in Table 1 indicates that an ultraviolet absorbent skeleton or an ultraviolet absorbent group is not contained.

<Light fastness>

The obtained ink was measured using a spectrocolorimeter (product name "X-rite i1 Pro", manufactured by X-Rite Inc.) and diluted with water so that the visual density of a coated product was 1.00 ± 0.05. The diluted ink was applied onto a Photo Matte Paper / For pigments (product name; manufactured by SEIKO EPSON Corporation) using a No. 16 bar coater to obtain a coated product. The coated product was irradiated with a xenon lamp (100 kLux/hour) for 3 weeks.
Then, the visual densities before and after the irradiation were measured with a spectrometric measurement device, the residual rate was determined from the following expression, and the light fastness was evaluated according to the evaluation standard using the residual rate as an indicator.

$$\text{Residual rate (\%)} = \text{visual density after irradiation / visual density before irradiation)} \times 100$$

It is noted that AA, A, and B are practically acceptable levels.

<Evaluation standard>

AA: The residual rate is 85% or more.
A: The residual rate is 75% or more and less than 85%.
B: The residual rate is 65% or more and less than 75%.
C: The residual rate is 50% or more and less than 65%.
D: The residual rate is less than 50%.

<Adhesion>

The obtained ink was diluted with water so that the coloring material concentration of the ink was 3.5% by mass. The diluted ink was applied onto a Photo Matte Paper / For pigments (product name; manufactured by SEIKO EPSON Corporation) using a No. 16 bar coater to obtain a coated product. The visual density of the coated product was measured using a spectral colorimeter (product name "X-rite i1 Pro", manufactured by X-Rite Inc.), and the adhesion was evaluated according to the evaluation standard using the visual density as an indicator.
It is noted that AA, A, and B are practically acceptable levels.

<Evaluation standard>

AA: The visual density is 1.3 or more.
A: The visual density is 1.2% or more and less than 1.3.
B: The visual density is 1.1 or more and less than 1.2.
C: The visual density is less than 1.1.

<Strength>

The obtained ink was diluted with water so that the coloring material concentration of the ink was 0.03% by mass. The diluted ink was placed on a slide glass, and then a slide glass was placed on the placed diluted ink. Further, a weight of 200 g was placed on the upper slide glass and held for 1 minute. After 1 minute, the ink sandwiched between the slide glasses was observed with an optical microscope (product name "BX51", manufactured by Olympus Corporation) to check whether or not the microcapsule ruptured. The strength of the microcapsule was evaluated according to the evaluation standard using the rupture rate of the microcapsule as an indicator. For the rupture rate, the proportion of the number of ruptured microcapsules in the observation field of view with respect to the total number of microcapsules contained in the observation field of view was calculated in terms of the percentage.

It is noted that AA, A, and B are practically acceptable levels.

<Evaluation standard>

AA: No ruptured microcapsules were identified.
A: The ruptured microcapsules were less than 3%.
B: The ruptured microcapsules were 3% or more and less than 6%.
C: The ruptured microcapsules were 6% or more.

[Table 1]

| | Kind of polymer | Ultraviolet absorbent skeleton or ultraviolet absorbent group | Ultraviolet absorbent compound | Position of skeleton or group | Mass ratio of skeleton or group to coloring material (% by mass) | S/C | Light fastness | Adhesion | Strength |
|---|---|---|---|---|---|---|---|---|---|
| Example 1 | Polyurethane urea | Skeleton derived from benzophenone 1 | - | Main chain | 30 | 1/1 | AA | AA | AA |
| Example 2 | Polyester | Skeleton derived from benzophenone 1 | - | Main chain | 30 | 1/1 | AA | AA | A |
| Example 3 | Polyether | Skeleton derived from benzophenone 1 | - | Main chain | 30 | 1/1 | AA | AA | A |
| Example 4 | Polyurethane urea | Skeleton derived from benzophenone 1 | - | Main chain | 30 | 1/2 | A | AA | AA |
| Example 5 | Polyurethane urea | Skeleton derived from benzophenone 1 | - | Main chain | 15 | 1/1 | A | AA | AA |
| Example 6 | Polyurethane urea | Skeleton derived from benzophenone 1 | - | Main chain | 50 | 1/1 | AA | AA | AA |
| Example 7 | Polyurethane urea | Skeleton derived from benzophenone 1 | - | Main chain | 65 | 1/1 | AA | AA | A |
| Example 8 | Polyurethane urea | Skeleton derived from benzophenone 1 | - | Main chain | 30 | 2/5 | B | AA | A |
| Example 9 | Polyurethane urea | Skeleton derived from benzophenone 1 | - | Main chain | 30 | 2/1 | AA | B | AA |
| Example 10 | Polyester | Skeleton derived from benzophenone 1 | - | Main chain | 30 | 1/2 | A | AA | B |
| Example 11 | Polyurethane urea | Skeleton derived from benzophenone 1 | - | Main chain | 65 | 1/7 | B | AA | B |
| Example 12 | Polyurethane urea | Skeleton derived from benzophenone 1 | - | Main chain | 40 | 1/2 | AA | AA | A |
| Example 13 | Polyurethane urea | Skeleton derived from benzophenone 1 | - | Main chain | 50 | 1/3 | AA | AA | A |
| Example 14 | Polyurethane urea | Skeleton derived from triazine 1 | - | Main chain | 15 | 1/1 | A | AA | AA |

(continued)

| | Kind of polymer | Ultraviolet absorbent skeleton or ultraviolet absorbent group | Ultraviolet absorbent compound | Position of skeleton or group | Mass ratio of skeleton or group to coloring material (% by mass) | S/C | Light fastness | Adhesion | Strength |
|---|---|---|---|---|---|---|---|---|---|
| Example 15 | Polyurethane urea | Skeleton derived from benzophenone 1 | - | Main chain | 15 | 1/1 | A | AA | AA |
| Example 16 | Polyester | Skeleton derived from benzotriazole 1 | - | Main chain | 15 | 1/1 | A | AA | A |
| Example 17 | Polyether | Skeleton derived from benzotriazole 1 | - | Main chain | 15 | 1/1 | A | AA | A |
| Example 18 | Polyurethane urea | Skeleton derived from benzophenone 2 | - | Main chain | 30 | 1/1 | AA | AA | AA |
| Example 19 | Polyurethane urea | Skeleton derived from benzophenone 3 | - | Main chain | 30 | 1/1 | AA | AA | AA |
| Comparative example 1 | Acrylic polymer | Benzotriazole group | - | Side chain | 10 | 1/1 | C | AA | C |
| Comparative example 2 | Acrylic polymer | Benzotriazole group | - | Side chain | 50 | 5/1 | AA | C | B |
| Comparative example 3 | Acrylic polymer | Benzotriazole group | - | Side chain | - | - | - | - | - |
| Comparative example 4 | Polyurethane urea | - | - | - | - | 1.7/1 | D | AA | AA |
| Comparative example 5 | Polyurethane urea | - | Encapsulated | - | - | 0.7/1 | C | AA | AA |

Details of the benzotriazole group in Table 1 are described below.

Benzotriazole group: 2-[3-(2H-benzotriazol-2-yl)-4-hydroxyphenyl]ethyl group

As shown in Table 1, in Example 1 to Example 19, the microcapsule includes a shell part that contains a polymer and a core part that is encapsulated in the shell part and contains a coloring material, where the polymer in the shell part has an ultraviolet absorbent skeleton in the main chain thereof, and thus has excellent light fastness, high adhesion, and high strength.

From the comparison between Example 1 to Example 3, it can be seen that higher strength can be obtained in a case where the kind of polymer is polyurethane urea.

From the results of Examples 1 and 4, it can be seen that Example 1 in which the ratio S/C is 1/1 is more excellent in light fastness. In addition, from the results of Example 8 to Example 11, it can be seen that the case of the ratio of 2/1 is the most excellent in light fastness; however, the case of the ratio of 2/1 exhibits a decrease in adhesion. In a case where the results of Examples 1, 4, and 8 to 11 are combined, it is conceived that the range of the ratio S/C is preferably 1/3 to 1/1 and more preferably 1/2 to 1/1.

From the results of Examples 5 to 7, it can be seen that in a case where the mass ratio of the ultraviolet absorbent skeleton to the coloring material is in a range of 15% by mass to 65% by mass, it is effective in balancing the light fastness, the adhesion, and the strength.

Further, as shown in the results of Examples 1 to 3 and Examples 14 to 19, good results were obtained in all of the benzophenone skeleton, the benzotriazole skeleton, and the triazine skeleton, as the ultraviolet absorbent skeleton. Among them, in a case where the benzophenone skeleton was contained, particularly excellent light fastness was exhibited, and high adhesion and high strength were exhibited.

On the other hand, in Comparative Example 1, since the shell part of the microcapsule was formed of a styrene acrylic resin having an ultraviolet absorbent group in the side chain thereof, the light fastness was inferior, and further, the strength was inferior since the shell part was a thin film.

In addition, in Comparative Example 2, the shell part of the microcapsule was formed of a styrene acrylic resin having an ultraviolet absorbent group in the side chain thereof as in Comparative Example 1; however, the shell part was made into a thick film, and thus the light fastness was improved. However, since the shell part was a thick film, the adhesion was reduced, and furthermore, the strength was only slightly improved.

In Comparative Example 3, an attempt was made to form the shell part of the microcapsule with a styrene acrylic resin having an ultraviolet absorbent group in the side chain thereof as in Comparative Example 1 and to increase the mass ratio of the ultraviolet absorbent group to the coloring material. However, the strength of the shell part was low, and thus the microcapsule could not be produced.

In Comparative Example 4, since the polymer that forms the shell part of the microcapsule did not have an ultraviolet absorbent skeleton in the main chain thereof, the result was that the light fastness was inferior.

In Comparative Example 5, the ultraviolet absorbent compound was encapsulated together with the coloring material, as the core material of the microcapsule. In the aspect in which the ultraviolet absorbent compound is encapsulated as the core material, the light fastness was significantly inferior to that of Example in which the ultraviolet absorbent skeleton was present in the main chain of the polymer of the shell.

As described above, since the polymer in the shell part that encapsulates the core part containing a coloring material has an ultraviolet absorbent skeleton in the main chain thereof, the microcapsule of the present disclosure has excellent light fastness, high adhesion, and high strength.

The disclosure of Japanese patent application 2019-068415 filed on March 29, 2019, is incorporated in the present specification by reference in its entirety. In addition, all documents, patent applications, and technical standards described in the present specification are incorporated in the present specification by reference, to the same extent as in the case where each of the documents, patent applications, and technical standards is specifically and individually described.

## Claims

**1.** A microcapsule comprising:

a shell part containing a polymer; and
a core part encapsulated in the shell part,
wherein the core part contains a coloring material, and
the polymer has an ultraviolet absorbent skeleton in its main chain.

2. The microcapsule according to claim 1, wherein S/C, which is a ratio of a mass S of the shell part to a mass C of the core part, is 1/7 to 3/1.

3. The microcapsule according to claim 1 or 2, wherein a mass ratio of the ultraviolet absorbent skeleton to the coloring material is 10% by mass to 70% by mass.

4. The microcapsule according to any one of claims 1 to 3, wherein the polymer is polyurethane, polyurea, polyurethane urea, polyaminoplast, polyester, polyether, or polyamide.

5. The microcapsule according to any one of claims 1 to 4, wherein the polymer is polyurea, polyurethane, or polyurethane urea.

6. The microcapsule according to any one of claims 1 to 5, wherein the ultraviolet absorbent skeleton is a skeleton derived from an ultraviolet absorbent compound.

7. The microcapsule according to claim 6, wherein the ultraviolet absorbent compound has at least two substituents that do not form an intramolecular hydrogen bond, the two substituents being selected from the group consisting of a hydroxyl group, an amino group, a thiol group, an epoxy group, and a carboxy group.

8. The microcapsule according to any one of claims 1 to 7, wherein the ultraviolet absorbent skeleton is a benzophenone skeleton, a benzotriazole skeleton, or a triazine skeleton.

9. The microcapsule according to any one of claims 1 to 8, wherein the ultraviolet absorbent skeleton is a skeleton derived from a benzophenone compound represented by Formula (1),

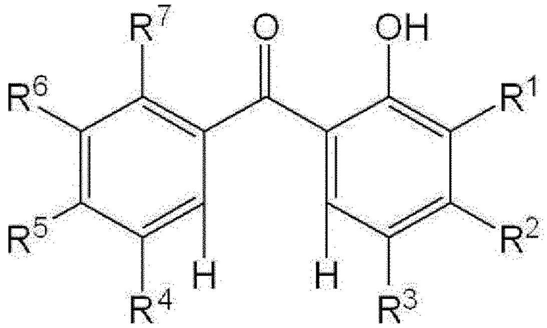

(1)

in Formula (1), $R^1$, $R^2$, $R^3$, $R^4$, $R^5$, $R^6$, and $R^7$ each independently represent a hydrogen atom, a halogen atom, an alkyl group, an alkoxy group, a hydroxyl group, an amino group, a thiol group, a carboxy group, or a sulfo group, and at least two of $R^1$ to $R^6$ are each a hydroxyl group or an amino group.

10. A microcapsule composition comprising:

the microcapsule according to any one of claims 1 to 9; and
a solvent.

11. An ink composition comprising:

the microcapsule according to any one of claims 1 to 9; and
a solvent.

12. A paint comprising:

the microcapsule according to any one of claims 1 to 9; and

a solvent.

**13.** A resin composition comprising:

the microcapsule according to any one of claims 1 to 9; and
a resin.

## INTERNATIONAL SEARCH REPORT

International application No.
PCT/JP2019/045963

A. CLASSIFICATION OF SUBJECT MATTER
Int. Cl. [see extra sheet]

According to International Patent Classification (IPC) or to both national classification and IPC

B. FIELDS SEARCHED

Minimum documentation searched (classification system followed by classification symbols)
Int. Cl. C09C3/10, B41J2/01, B41M5/00, C08K9/10, C08L101/00, C09B67/08, C09C1/00, C09D7/41, C09D7/62, C09D7/65, C09D11/037, C09D11/32, C09D201/00, C08G18/32, C08G59/62, C08G63/183, C09B31/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-315716 A (TOYO INK MANUFACTURING CO., LTD.) 11 November 2004, claims, paragraphs [0005], [0006], [0009], [0016], [0017], [0026], [0029], [0030], examples (Family: none) | 1-8, 10-13 |
| X | JP 11-148034 A (MITSUBISHI CHEMICAL CORP.) 02 June 1999, claims, paragraphs [0001], [0012], [0020], [0032], [0037], examples (Family: none) | 1-3, 6-8, 10-13 |
| X | JP 2012-036378 A (TOYO INK SC HOLDINGS CO., LTD.) 23 February 2012, claims, paragraphs [0006], [0017]-[0019], [0034], [0035], [0041], [0042], [0047], examples (Family: none) | 1-8, 10-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13.12.2019 | 24.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/045963

C (Continuation). DOCUMENTS CONSIDERED TO BE RELEVANT

| Category* | Citation of document, with indication, where appropriate, of the relevant passages | Relevant to claim No. |
|---|---|---|
| A | WO 1999/067337 A1 (SEIKO EPSON CORP.) 29 December 1999, entire text & US 6972303 B1, entire text & EP 1006161 A1 & JP 2000-007967 A | 1-13 |
| A | WO 2011/118557 A1 (DAINICHISEIKA COLOR & CHEMICALS MFG. CO., LTD.) 29 September 2011, entire text & US 2013/0012626 A1, entire text & EP 2551303 A1 & CN 102822285 A & KR 10-2013-0004344 A | 1-13 |
| A | JP 2015-025116 A (FUJIFILM CORP.) 05 February 2015, entire text (Family: none) | 1-13 |
| A | JP 10-101961 A (TIOXIDE GROUP SERVICES LTD.) 21 April 1998, entire text & US 5910213 A, entire text & EP 824137 A2 & KR 10-1998-0018228 A | 1-13 |

Form PCT/ISA/210 (continuation of second sheet) (January 2015)

**INTERNATIONAL SEARCH REPORT**

International application No.
PCT/JP2019/045963

[Continuation of Box A]
C09C3/10(2006.01)i, B41J2/01(2006.01)i, B41M5/00(2006.01)i, C08K9/10(2006.01)i, C08L101/00(2006.01)i, C09B67/08(2006.01)i, C09C1/00(2006.01)i, C09D7/41(2018.01)i, C09D7/62(2018.01)i, C09D7/65(2018.01)i, C09D11/037(2014.01)i, C09D11/32(2014.01)i, C09D201/00(2006.01)i, C08G18/32(2006.01)n, C08G59/62(2006.01)n, C08G63/183(2006.01)n, C09B31/14(2006.01)n

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3446213 B
- JP 2000034430 A
- JP 2005305872 A
- JP 2019068415 A

### Non-patent literature cited in the description

- Polyurethane Resin Handbook. NIKKAN KOGYO SHIMBUN, Ltd, 1987